# EUROPÄISCHE PATENTSCHRIFT

(11) **EP 3 732 315 B1**
(45) Veröffentlichungstag und Bekanntmachung des Hinweises auf die Patenterteilung: **16.10.2024**
(21) Anmeldenummer: 18836813.8
(22) Anmeldetag: 19.12.2018
(51) Int. Cl.: C25B 1/135, C25B 3/07, C25B 3/09, C25B 3/23, C01B 32/19

(54) **VERFAHREN ZUR HERSTELLUNG EINER TENSIDFREIEN DISPERSION AUS FUNKTIONALISIERTEM HALBLEITER- ODER LEITERMATERIAL**
METHOD FOR PRODUCING A SURFACTANT-FREE DISPERSION OF FUNCTIONALIZED SEMICONDUCTOR OR CONDUCTOR MATERIAL
PROCÉDÉ DE PRÉPARATION D'UNE DISPERSION SANS TENSIOACTIF D'UN MATÉRIAU SEMI-CONDUCTEUR OU CONDUCTEUR FONCTIONNALISÉ

(30) Priorität: 29.12.2017 DE 102017223892
(43) Veröffentlichungstag der Anmeldung: 04.11.2020
(73) Patentinhaber: Sixonia Tech GmbH, 01187 Dresden (DE)
(72) Erfinder: LOHE, Martin, 01187 Dresden (DE); FENG, Xinliang, 01309 Dresden (DE); NIA, Ali Shaygan, 01097 Dresden (DE)
(74) Vertreter: Kailuweit & Uhlemann Patentanwälte Partnerschaft mbB
(86) Internationale Anmeldenummer: PCT/EP2018/085825
(87) Internationale Veröffentlichungsnummer: WO 2019/129573

(56) Entgegenhaltungen:
- WO-A1-2016/203388
- WO-A1-2017/050689
- OSSONON BENJAMIN DIBY ET AL: "Functionalization of graphene sheets by the diazonium chemistry during electrochemical exfoliation of graphite", CARBON, ELSEVIER, OXFORD, GB, vol. 111, 28 September 2016 (2016-09-28), pages 83 - 93, XP029808412, ISSN: 0008-6223, DOI: 10.1016/J.CARBON.2016.09.063
- CHIA-HSUAN CHEN ET AL: "Towards the continuous production of high crystallinity graphene via electrochemical exfoliation with molecular in situ encapsulation", NANOSCALE, vol. 7, no. 37, 1 January 2015 (2015-01-01), United Kingdom, pages 15362 - 15373, XP055560609, ISSN: 2040-3364, DOI: 10.1039/C5NR03669K
- DE-ZHEN SUN ET AL: "In-situ growth of graphene/polyaniline for synergistic improvement of extracellular electron transfer in bioelectrochemical systems", BIOSENSORS AND BIOELECTRONICS, vol. 87, 13 August 2016 (2016-08-13), AMSTERDAM, NL, pages 195 - 202, XP055592437, ISSN: 0956-5663, DOI: 10.1016/j.bios.2016.08.037
- SONG YU ET AL: "Electrochemical anchoring of dual doping polypyrrole on graphene sheets partially exfoliated from graphite foil for high-performance supercapacitor electrode", JOURNAL OF POWER SOURCES, ELSEVIER SA, CH, vol. 249, 1 November 2013 (2013-11-01), pages 48 - 58, XP028804766, ISSN: 0378-7753, DOI: 10.1016/J.JPOWSOUR.2013.10.102
- FARID OUHIB ET AL: "A facile and fast electrochemical route to produce functional few-layer graphene sheets for lithium battery anode application", JOURNAL OF MATERIALS CHEMISTRY A, vol. 2, no. 37, 22 July 2014 (2014-07-22), GB, pages 15298 - 15302, XP055399858, ISSN: 2050-7488, DOI: 10.1039/C4TA03139C

## Beschreibung

Die Erfindung betrifft ein Verfahren zur Herstellung von tensidfreien Dispersionen aus funktionalisiertem Halbleiter- oder Leitermaterials durch elektrolytische Exfolierung eines Grundmaterials und in-situ Funktionalisierung der dabei gebildeten Schichten und/oder Monolagen.

### Stand der Technik

Die Isolierung einzelner Schichten zweidimensional strukturierter oder geschichteter Halbleiter- oder Leitermaterialien ist seit einigen Jahren von Interesse, nicht zuletzt, da die Verwendung dieser Materialien in elektronischen Bauteilen zu enormen Leistungssteigerungen und effizienten Anwendungen führt.

Ein Beispiel für eine solche isolierte Schicht eines zweidimensional strukturierten oder geschichteten Materials ist Graphen, welches eine Monolage, also eine einzelne, nur eine Atomlage dicke Schicht des Graphits, einer natürlich vorkommenden Erscheinungsform des Kohlenstoffs in Reinform, darstellt. Graphen bezeichnet aber auch Material, in dem einige dieser Monolagen übereinander geschichtet angeordnet sind.

Graphen kann als ein zweidimensionales Netzwerk aneinandergeketteter Benzolringe verstanden werden, welches u.a. eine enorme elektrische Leitfähigkeit aufweist. Durch seine elektronischen, thermischen, optischen und mechanischen Eigenschaften ist seine Verwendung auf vielen Gebieten der Technik von großem Interesse. Verfahren zur skalierbaren und effizienten Herstellung von qualitativ hochwertigem, möglichst aus der Lösung heraus prozessierbaren Leiter- und Halbleitermaterialien, wie beispielsweise Graphen, sind deshalb Gegenstand intensiver Forschungsarbeiten.

Die Herstellung von beispielsweise Graphen erfolgt dabei unter teilweise schwierigen Prozessbedingungen, da im Labormaßstab mit hochsiedenden Lösungsmitteln wie DMF und NMP gearbeitet wird. Ein Up-Scaling in einen industriellen Maßstab ist damit äußerst problematisch und verhinderte bisher die großtechnische Herstellung und Anwendung dieses Materials.

Eine weitere Herausforderung stellt die Lagerung des frisch hergestellten Graphens dar, da dieses nach einer Trocknung nur noch schwer redispergierbar und die Prozessierbarkeit der Material-Monolagen bzw. Oligolagen enorm erschwert ist.

Eine der bedeutendsten, aber bisher noch wenig verbreitete Technologie zur Herstellung von Monolagen oder dünnen Schichten von Leitermaterialien wie Graphen ist die elektrolytische Exfolierung von zweidimensional, geschichtet strukturiertem Grundmaterial, wie beispielsweise Graphit.

Die Exfolierung von Graphit zur Herstellung von Graphen, beispielsweise in Form von Flakes oder Flocken stellt eine kostengünstige und verlässliche Strategie zu dessen Gewinnung dar.

Graphen Schichten als Flocken wurden bereits erfolgreich aus Graphit als Grundmaterial in festem Zustand (siehe beispielsweise i) K. S. Novoselov, A. K. Geim, S. V. Morozov, D. Jiang, Y. Zhang, S. V. Dubonos, I. V. Grigorieva, A. A. Firsov, Science 2004, 306, 666-669; ii) V. Leon, M. Quintana, M. A. Herrero, J. L. G. Fierro, A. d. I. Hoz, M. Prato, E. Vazquez, Chem. Commun. 2011, 47, 10936-10938) oder in flüssiger Phase (siehe beispielweise i) Z. Y. Xia, S. Pezzini, E. Treossi, G. Giambastiani, F. Corticelli, V. Morandi, A. Zanelli, V. Bellani, V. Palermo, Adv. Funct. Mater. 2013, 23, 4684-4693; b) A. Ciesielski, P. Samori, Chem. Soc. Rev. 2014, 43, 381-398.) isoliert.

Auch durch die Reduktion von Graphenoxid, welches beispielsweise durch die sogenannte Hummers Methode (W.S. Hummers et al. J. Am. Chem. Soc. 1958, 80, 6, 1339*)* hergestellt werden kann, wurde Graphen erfolgreich hergestellt.

Graphenoxid ist hervorragend dispergierbar in einer Vielzahl von Lösungsmittel, insbesondere auch Wasser, was die Umsetzung einer Anwendung in größerem Maßstab stark erleichtert. Auch ist es nach kompletter Trocknung wieder redispergierbar.

Nachteilig verbleiben bei den Reduktionsmethoden jedoch stets Oxidgruppen und weitere Defekte, wie Löcher oder nicht sechs-zählige Ringe innerhalb des Materials. Diese strukturellen Defekte führen zu starken Einschränkungen der elektronischen und thermischen Eigenschaften des aus Graphenoxid erzeugten Graphens (C. Gómez-Navarro, R. T. Weitz, A. M. Bittner, M. Scolari, A. Mews, M. Burghard, K. Kern, Nano Lett. 2007, 7, 3499-3503).

Die sogenannte Flüssigphasen-Exfolierung von Graphit nutzt rein physikalische Scherkräfte in vor allem organischen Lösungsmitteln und ermöglicht eine Herstellung von Graphen mit deutlich weniger Defekten (siehe beispielsweise a) F. Bonaccorso, A. Bartolotta, J. N. Coleman, C. Backes, Adv. Mater. 2016, 28, 6136-6166; b) A. Ciesielski, S. Haar, M. EI Gemayel, H. Yang, J. Clough, G. Melinte, M. Gobbi, E. Orgiu, M. V. Nardi, G. Ligorio, V. Palermo, N. Koch, O. Ersen, C. Casiraghi, P. Samorì, Angew. Chem. Int. Ed. 2014, 53, 10355-10361). Nachteilig erreicht man damit allerdings nur geringe Ausbeuten an exfoliertem Graphen und sehr kleine laterale Schichtgrößen (J. N. Coleman, Acc. Chem. Res. 2013, 46, 14-22).

Zudem neigen die kleinen Materialplättchen dazu, sich nach der Exfolierung wieder zusammenzulagern (zu stapeln). Der Einsatz von Tensiden oder anderen Additiven zur Verhinderung dieses Effekts ist damit unvermeidlich. Diese Additive sind jedoch schwer wieder zu entfernen und verringern die Leitfähigkeit des Produktes erheblich.

Die Anodische Exfolierung hat sich kürzlich als sehr vielversprechende Methode etabliert, um Graphen in hoher Qualität in großen Maßstäben, bei niedrigen Kosten und in wässriger Lösung herzustellen.

Das zweidimensional strukturierte Grundmaterial kann dabei entweder als Anode in wässrigen Lösungen ionischer Flüssigkeiten (siehe beispielsweise X. Wang, P. F. Fulvio, G. A. Baker, G. M. Veith, R. R. Unocic, S. M. Mahurin, M. Chi, S. Dai, Chem. Commun. 2010, 46, 4487-4489) oder mineralischer Säuren (siehe beispielsweise a) K. S. Rao, J. Sentilnathan, H.-W. Cho, J.-J. Wu, M. Yoshimura, Adv. Funct. Mater. 2015, 25, 298-305; b) K. Parvez, R. Li, S. R. Puniredd, Y. Hernandez, F. Hinkel, S. Wang, X. Feng, K. Müllen, ACS Nano 2013, 7, 3598-3606) oder anorganischer Salze (z.B.(a) K. Parvez, Z.-S. Wu, R. Li, X. Liu, R. Graf, X. Feng, K. Müllen, J. Am. Chem. Soc. 2014, 136, 6083-6091; b) S. Yang, S. Brüller, Z.-S. Wu, Z. Liu, K. Parvez, R. Dong, F. Richard, P. Samorì, X. Feng, K. Müllen, J. Am. Chem. Soc. 2015, 137, 13927-13932) geschalten werden. Unter Einfluss des elektrischen Stromes werden dabei Elektronen vom zweidimensional strukturierten Grundmaterial, z.B. Graphit, abgespalten und hinterlassen eine positive Ladung an der Anode. Die Anionen des Elektrolyten können dann leicht zwischen die einzelnen Schichten des Grundmaterials, z.B. Graphit, geschoben werden und diese abspalten.

Nachteilig enthält das so hergestellte Graphen jedoch hohe Anteile an Sauerstoffgruppen. Grund dafür sind Sauerstoffradikale wie HO· Oder O-, die während des Herstellungsprozesses durch die Spaltung von Wasser gebildet werden und an die Graphenschichten addieren (siehe K. S. Rao, J. Sentilnathan, H.-W. Cho, J.-J. Wu, M. Yoshimura, Adv. Funct. Mater. 2015, 25, 298-305).

Weiterhin problematisch ist die Durchführung des Verfahrens in hochsiedenden Lösungsmitteln wie DMF oder NMP. Zudem haften die exfolierten Schichten nach der Trocknung wieder zusammen und es ist schwierig, sie zu redispergieren.

Eine Möglichkeit, die Dispergierbarkeit der Graphenschichten zu erhöhen, ist die Funktionalisierung der Graphenlagen mit kleinen Molekülen oder Polymeren.

Frühere Arbeiten beschäftigten sich mit der kathodischen Exfolierung von Graphit in organischen Lösungsmitteln und der gleichzeitig ablaufenden, in-situ-Funktionalisierung der Graphenschichten mit Diazoniumsalzen (siehe u.a. (a) Ejigu, A.; Kinloch, I. A.; Dryfe, R. A. W., Single Stage Simultaneous Electrochemical Exfoliation and Functionalization of Graphene. ACS Applied Materials & Interfaces 2017, 9 (1), 710-721; (b) Zhong, Y. L.; Swager, T. M., Enhanced Electrochemical Expansion of Graphite for in Situ Electrochemical Functionalization. Journal of the American Chemical Society 2012, 134 (43), 17896-17899; (c) Ossonon, B. D.; Bélanger, D., Functionalization of graphene sheets by the diazonium chemistry during electrochemical exfoliation of graphite. Carbon 2017, 111, 83-93.)

Carbon 2017, 111, 83-93 zeigt die Funktionalisierung exfolierten Graphens mit DiazoniumVerbindungen (Diazonium-substituiertes Anthrachinon), d.h. mit -N₂⁺.

Die Diazoniumsalze generieren freie Radikale und funktionalisieren die Oberfläche durch eine Reduktionsreaktion an der Kathode.

Weitere Publikationen beschäftigen sich mit der anodischen Exfolierung von Graphit unter Verwendung verschiedener organischer Salze als Elektrolyt wie Phytinsäure (Feng, X.; Wang, X.; Cai, W.; Qiu, S.; Hu, Y.; Liew, K. M., Studies on Synthesis of Electrochemically Exfoliated Functionalized Graphene and Polylactic Acid/Ferric Phytate Functionalized Graphene Nanocomposites as New Fire Hazard Suppression Materials. ACS Applied Materials & Interfaces 2016, 8 (38), 25552-25562), Hex(4-carboxylphenoxy)cyclotriphosphazen (Cai, W.; Feng, X.; Wang, B.; Hu, W.; Yuan, B.; Hong, N.; Hu, Y., A novel strategy to simultaneously electrochemically prepare and functionalize graphene with a multifunctional flame retardant. Chemical Engineering Journal 2017, 316, 514-524), Tetracyanoquinodimethan (Khanra, P.; Lee, C.-N.; Kuila, T.; Kim, N. H.; Park, M. J.; Lee, J. H., 7,7,8,8-Tetracyanoquinodimethaneassisted one-step electrochemical exfoliation of graphite and its performance as an electrode material. Nanoscale 2014, 6 (9), 4864-4873.), 9-Anthrazen-Carbonsäure (Khanra, P.; Kuila, T.; Bae, S. H.; Kim, N. H.; Lee, J. H., Electrochemically exfoliated graphene using 9-anthracene carboxylic acid for supercapacitor application. Journal of Materials Chemistry 2012, 22 (46), 24403-24410), Tetranatriumtetrasulfonsäure (Mensing, J. P.; Kerdcharoen, T.; Sriprachuabwong, C.; Wisitsoraat, A.; Phokharatkul, D.; Lomas, T.; Tuantranont, A., Facile preparation of graphene-metal phthalocyanine hybrid material by electrolytic exfoliation. Journal of Materials Chemistry 2012, 22 (33), 17094-17099), oder organische Natriumsulfonate (Munuera, J. M.; Paredes, J. I.; Villar-Rodil, S.; Ayan-Varela, M.; Martinez-Alonso, A.; Tascon, J. M. D., Electrolytic exfoliation of graphite in water with multifunctional electrolytes: en route towards high quality, oxide-free graphene flakes. Nanoscale 2016, 8 (5), 2982-2998).

Diese Publikationen beschreiben die Interkalation des Salzes zwischen die einzelnen Schichten des Graphits und die Funktionalisierung der Schichten durch p-p-Wechselwirkungen.

Die so funktionalisierten Graphenschichten zeigen hohe I_{D}/I_{G} Verhältnisse im RAMAN Spektrum. Die Leitfähigkeit der Schichten und ihre Dispergierbarkeit wird nicht betrachtet.

In einigen Beispielen wird die Verwendung des funktionalisierten Graphens als Elektrodenmaterial in Batterien oder Superkondensatoren beschrieben.

Andere Veröffentlichungen zeigen die Exfolierung von Graphit mit gemischten Elektrolyten wie Ammoniumsulfat/Ammoniak oder Glycin und Ammoniak. Auch Na₂S₂O₃/ H₂SO₄ Systeme und Kaliumhalogenide wurden verwendet, um das Graphen mit Heteroatomen oder Halogenen zu dotieren.

Chen et al. (Chen, C. H. et al. Nanoscale, 2015, 7, 15362 - 15373) publizierten eine Graphenexfolierung mit Hilfe von kleinmolekularen Additiven wie Melamin, um Melaminfunktionalisierte Graphen-Lagen zu erhalten. Die Ausbeute der Exfolierung wurde erhöht. Über die zeitliche Stabilität daraus hergestellter Dispersionen werden keine Aussagen getroffen. Beschrieben wird eine Methode zur Herstellung von hochkristallinem Graphen durch elektrolytische Exfolierung in 0,65 M Schwefelsäure unter der Zugabe von Melamin in hohen Konzentrationen von 10 bis 200 g/ 100 ml Elektrolytlösung. Bei Spannungen von 20 V werden mit einer periodischen Umkehr der Polarität mit einer Periode von 10 min, Graphenschichten von der Graphitelektrode exfoliert und mit Melaminmolekülen behaftet. Diese in-situ aufgebrachten Schutzschichten verhindern eine weitere Oxidation der Graphenschicht und führen so zu größeren Graphen-Kristalliten. Das verbleibende Melamin wird anschließend vom gesammelten Graphen mit Wasser abgewaschen welches nach Trocknung ein hohes C/O Verhältnis von 26,17 zeigt, das heißt, eine geringe Defektdichte an Sauerstoffdefekten. Die Autoren gehen hierbei davon aus dass es nicht zu einer kovalenten Funktionalisierung der Graphenplättchen kommt. Das so hergestellte Graphen ist gut in DMF oder NMP dispergierbar. Angegeben ist u.a. die Verwendung einer Dispersion von Graphen in DMF zur Prozessierung auf Quartzsubstraten.

Eine weitere Möglichkeit zu Herstellung von funktionalisiertem Graphen ist die Verwendung von ionischen Flüssigkeiten, also Salzen, die bei Temperaturen unter 100°C flüssig sind, ohne dass das Salz dabei in einem Lösungsmittel wie Wasser gelöst ist.

Eine Publikation von Liu et al. (Adv. Funct. Mater. 2008, 18, 1518 - 1525) beschreibt die elektrolytische Exfolierung von Graphit in einer wässrigen Elektrolytlösung, enthaltend ionische Flüssigkeiten. Die Kationen der ionischen Flüssigkeiten interkalieren zwischen die einzelnen Schichten des Graphit und treiben diese so auseinander. In diesem Fall wurde als ionische Flüssigkeit ein Imidazolium hexafluorophosphat verwendet. XPS Messungen ergaben, dass die zwei Stickstoffatome der Imidazoliumgruppe mit der Oberfläche des Graphen interagieren und so das Salz an das Graphen binden. Das so funktionalisierte Graphen ist nicht in Wasser, jedoch in aprotischen Lösungsmittel, wie DMF oder NMP dispergierbar.

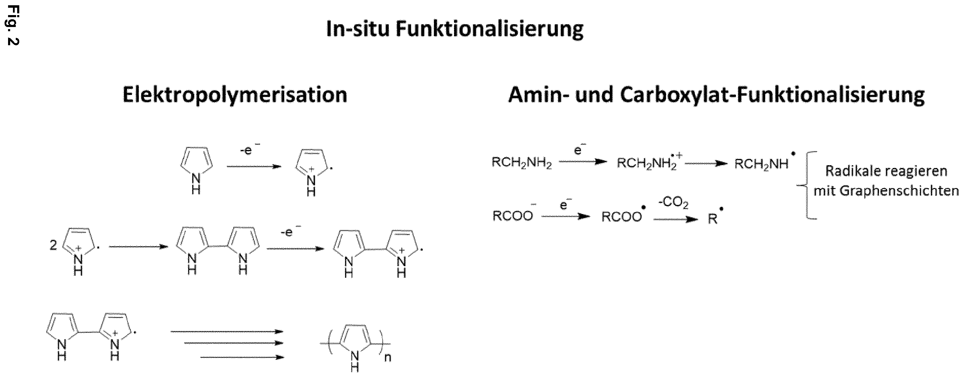

Von Ouhib et al wurde 2014 eine Methode zur Herstellung von funktionalisiertem Graphen aus wenigen Schichten publiziert (Ouhib et al. J. Mater. Chem. A, 2014, 2, 15298). Beschrieben wird die kathodische Graphenexfolierung mit Acrylnitril und Tetraethylammoniumperchlorat in einem organischen Elektrolyten (DMF) für die Anwendung in Batterien. Die erhaltenen Produkte werden in Dimethylformamid dispergiert. So wird hochgeordnetes pyrolytisches Graphit (HOPG) als Kathode in eine Elektrolysezelle mit einem Elektrolyten, enthaltend ein Ammoniumsalz und Vinylmonomere, eingebracht und Graphenschichten exfoliert. Parallel dazu erfolgte die Elektropolymerisation der Vinylmonomere, wobei sich eine chemisorbierte Polymerschicht um die Graphenschichten bildete. Nachteilig erfolgte die Elektrolyse wiederum in wasserfreien, hochsiedenden organischen Lösungsmitteln wie DMF und die Exfolierung findet nur mit Hilfe einer Ultraschallbehandlung statt. Die kathodische Exfolierung sorgt außerdem dafür, dass keine Monolagen von Graphen gebildet werden können, es sich vielmehr um Graphit Nanoplatelets mit >20 bis 50 Atomlagen handelt, wie im Raman Spektrum der Probe in Fig. 2 der Publikation ersichtlich ist. Few-layer Graphen würde, im Gegensatz zu Graphit, im Spektrum einen symmetrischen 2D-peak ohne Schulter bei -2700 cm⁻¹ zeigen, diese ist jedoch in Fig. 2 deutlich erkennbar.

WO 2012/064292 offenbart ein Verfahren zu Herstellung von Polymer-Graphen Kompositen, wobei Graphenlagen elektrolytisch von Graphitelektroden exfoliert werden. Die Exfolierung erfolgt in einer Polymer-Lösung, wobei vorzugsweise PDOT-PSS als Polymer verwendet wird. Es bilden sich Komposite mit leitfähigen Polymeren, welche gut dispergierbar sind Nachteilig werden in dem Verfahren ausschließlich bereits polymerisierte Elektrolyt-Additive eingesetzt, welche gegenüber den entsprechenden Monomeren Es kann angenommen werden, dass die verwendeten Polymere in der Elektrolytlösung sowohl die Rolle des in die Graphitschichten interkalierenden Exfoliationsmittels als auch die Rolle einer Graphenfunktionalisierung übernehmen. Aufgrund der voluminösen Größe der Polymermoleküle ist von einem kinetisch gehemmten und dementsprechend langsamen Interkalationsprozess auszugehen, worauf auch die langen Exfoliationszeiten von bis zu 40h hinweisen.

KR 20160072535 A beschreibt einen Prozess zur Herstellung von Graphen Nanofilmen durch elektrochemische Exfolierung in einer Persulfat Elektrolyt-Lösung. Dazu werden die gewaschenen und getrockneten Elektroden in eine entsprechende Elektrolytlösung getaucht und bei 1 bis 20 V Spannung exfoliert, wobei Graphen Nanofilme gebildet werden. Diese werden anschliessend durch Filtration von der Elektrolytlösung getrennt und mit destilliertem Wasser gewaschen. Zur Herstellung einer Nanotinte werden die Nanofilm Partikel in einem organischen Lösungsmittel wie beispielsweise N-methyl-pyrrolidinon (NMP) oder DMF in einer Konzentration von 0,5 bis 20 mg/ ml mittels Ultraschall dispergiert, womit eine Wiederanlagerung der Nanofilmpartikel aneinander verhindert werden soll. Nachteilig können in dem Verfahren zwar mehr oder weniger stark oxidierte, aber keine gezielt funktionalisierten Graphenfilme erzeugt werden.

WO 2017/050689 A1 zeigt die Exfolierung von Graphit unter Anwesenheit von Radikalfängern. Als Radikalfänger kommen zum Einsatz: TEMPO, welches kontrollweise ersetzt wurde durch Ascorbinsäure, NaBH₃, Gallussäure, H₂N-NH₂*H₂O oder HI. Die Dispersionen werden in einem separaten Dispergierungsschritt mit Additiven wie Polyvinylpyrrolidone oder Poly(Natrium 4-Styrolsulfonat) hergestellt. Über die Dauer der Stabilität der Dispersionen werden keine Aussagen gemacht.

WO 2016/203388 A1 zeigt die Funktionalisierung von Graphen mit Hilfe von Biomolekülen wie Glutathion und zwar mit dem Ziel der Papier-Haltbarmachung bzw. -Restaurierung.

In Biosensors and Bioelectronics 2017, 87, 195-202 wird die Funktionalisierung von Graphit-/ bzw. Graphenelektroden mit Polyanilin beschrieben - für den Einsatz im Bereich bioelektrochemischer Systeme (BES), bspw. in der biologischen Sanierung (bioremediation) oder dem Bioabbau von Schmutz. Solche BES nutzen elektro-aktive Mikroorganismen für den extrazellulären Elektronentransfer.

Journal of Power Sources 2014, 249, 48-58 befasst sich mit der Elektropolymerisation von Pyrrol auf partiell exfoliertem Graphen. Eine Loslösung von den Elektroden findet nicht statt und ist nicht gewollt.

Eine Methode, die exfolierten Schichten von Leiter- oder Halbleitermaterialien, wie beispielsweise Graphen, in situ, kovalent chemisch zu funktionalisieren, um sie beispielsweise vor dem Angriff durch Hydroxyl-Radikale (Oxidation) zu schützen und/oder gleichzeitig die Dispergierbarkeit der Schichten in umweltfreundlichen, beispielsweise wässrigen, Lösungsmitteln ohne den Zusatz von oberflächenaktiven Additiven zu erhöhen, ist aus dem Stand der Technik bisher nicht bekannt.

Aufgabe der Erfindung die Bereitstellung eines Verfahrens zur Herstellung einer tensidfreien Dispersion aus funktionalisiertem Halbleiter- oder Leitermaterialien durch elektrolytische Exfolierung in umweltfreundlichen und im industriellen Maßstab einfach einsetzbaren Lösungsmitteln bei gleichzeitiger und/oder unmittelbarer Funktionalisierung der Monolagen oder dünnen Schichten des Materials zur besseren Dispergierbarkeit und einfacheren Prozessierung.

Die Aufgabe wird gelöst durch ein Verfahren zur Herstellung einer tensidfreien Disperion aus funktionalisiertem Halbleiter- oder Leitermaterialien aus einem zweidimensional geschichtet strukturierten, kohlenstoffbasierten Grundmaterial durch elektrolytische Exfolierung, in einer Elektrolysezelle, umfassend mindestens ein Elektrodenpaar aus erster und zweiter Elektrode, und eine wässrige und/oder alkoholische Elektrolytlösung, enthaltend Schwefelsäure und/oder mindestens ein Sulfat- und/oder Hydrogensulfatsalz und/oder ein Perchlorat und/ oder ein Persulfat,
mit den Schritten:
   a) Inkontaktbringen der Elektroden mit der Elektrolytlösung,
   b) Elektrolytische Exfolierung des Grundmaterials, beispielsweise in Form von Partikeln aus funktionalisiertem Leiter- oder Halbleitermaterial, durch Anlegen einer Spannung zwischen erster und zweiter Elektrode,
   c) Abtrennen des funktionalisierten Halbleiter- oder Leitermaterials von der Elektrolytlösung, und
   d) Dispergieren des funktionalisierten Materials nach der Abtrennung in anorganischen und/oder organischen flüssigen Medien, ohne Zusatz von Tensiden,
wobei mindestens die erste der Elektroden des Elektrodenpaares das zweidimensional geschichtet strukturierte, kohlenstoffbasierte Grundmaterial enthält, und die erste Elektrode als Anode geschaltet ist, und der Elektrolytlösung vor und/oder, während der elektrolytischen Exfolierung mindestens eine organische Verbindung zugegeben wird, wobei die organische Verbindung ausgewählt ist aus
   a. Monomeren elektrisch leitender Polymere, welche anodisch oxidativ polymerisiert werden, und/oder
   b. frei radikalisch polymerisierbaren, wasserlöslichen Vinyl-Monomeren, welche in ihrer Struktur wenigstens eine Amidgruppe (bspw. Isopropylacrylamid) und/oder eine anionische funktionelle Gruppe (bspw. SO₃⁻, NO₂⁻, CO₂⁻², PO₃⁻³, O⁻) aufweisen (bspw. Styrensulfonat) und welche an der Anode frei radikalisch polymerisieren.

Im Sinne der Erfindung ist ein Leiter- oder Halbleiter-Material ein elektrisch leitendes Material mit einer hochgeordneten, geschichteten Struktur, bestehend aus einer Monolage des Materials oder aus mehreren übereinander angeordneten Lagen des Materials. Das Halbleiter-Material weist eine spezifische Bandlücke auf, die aus der Energiedifferenz zwischen dem Valenzband und Leitungsband gebildet wird.

Im Sinne der Erfindung bedeutet "funktionalisiert", dass das Material mit funktionellen Gruppen oder Polymerketten beschichtet ist, die durch chemische Reaktion oder zumindest Chemisorption an der Oberfläche des Materials haften.

Erfindungsgemäß ist das Halbleiter- oder Leitermaterial ein kohlenstoffbasiertes Material, das heißt, sein Grundgerüst enthält hauptsächlich Kohlenstoff.

In einer Ausführungsform liegt das funktionalisierte Halbleiter- oder Leitermaterial in Form von Partikeln mit Abmessungen im Nanometer- bis Mikrometerbereich vor.

In einer Ausführungsform ist das Halbleiter- oder Leiter-Material ausgewählt aus Graphen, kohlenstoffbasierten Halbleiter- oder Leiter-Polymeren.

In einer Ausführungsform ist das zweidimensional geschichtete strukturierte Grundmaterial ausgewählt aus halbleitenden oder leitenden Kohlenstoffmodifikationen, kohlenstoffbasierten Halbleiter- oder Leiter-Polymeren in Form von zweidimensional strukturiertem Grundmaterial.

In einer Ausführungsform sind die halbleitenden oder leitenden Kohlenstoffmodifikationen, ausgewählt aus Graphit, nicht-graphitischem Kohlenstoff, Kohlenstoffnanoschaum, Glaskohlenstoff, Ruß, Aktivkohle, Kohlenstofffasern, Teer- und Pech und deren Derivaten.

Graphit kann dabei natürlich vorkommendes oder synthetisch hergestelltes Graphit sein.

Die Exfolierung des Halbleiter- oder Leitermaterials aus dem oder von dem zweidimensional, geschichtet strukturierten Grundmaterial erfolgt elektrolytisch in einer Elektrolysezelle, welche mindestens ein Elektrodenpaar enthält. Ein Elektrodenpaar umfasst eine erste Elektrode E1 und eine zweite Elektrode E2.

In einer Ausführungsform enthält mindestens die erste Elektrode E1 das Grundmaterial in Form von Flocken, Pulver, Fasern, Folien, Stücken, Pasten oder eine Mischung dieser. Die Elektrode kann auch eine einzelne Flocke des Grundmaterials sein, oder mehrere dieser Flocken, die entweder aneinandergepresst oder durch ein leitfähiges Material miteinander verbunden sind.

Erfindungsgemäß ist die Elektrode E1 während der Exfolierung als Anode geschalten.

In einer Ausführungsform umfasst die zweite Elektrode ein Metall. In einer Ausführungsform ist das Metall ein Edelmetall ausgewählt aus Cu, Au, Ag, Pt, Pd.

In einer weiteren Ausführungsform ist das Metall ein nicht edles Metall oder eine Legierung ausgewählt aus Fe, Stahl, Al, Pb, Messing, Ti, Zn, Sn, Ni, Hg, Mg.

In einer Ausführungsform ist die metallhaltige Elektrode während der Exfolierung als Kathode geschalten.

In einer Ausführungsform umfasst die zweite Elektrode ein nicht elementmetallisches leitfähiges Material. In einer Ausführungsform ist das nicht elementmetallische Material ausgewählt aus Graphit, Kohlenstoff und /oder aus leitfähigen Polymeren.

In einer Ausführungsform ist die nicht elementmetallische Elektrode während der Exfolierung als Kathode geschalten.

### Erfindungsgemäß ist die Elektrolytlösung eine wässrige und/oder alkoholische Lösung

In einer Ausführungsform ist die Lösung wässrig und alkoholisch, das heißt, sie enthält eine Mischung aus Wasser und Alkohol.

In einer Ausführungsform ist das Verhältnis Wasser/Alkohol 100:0 bis 0:100, bevorzugt 99:1 bis 1:99, besonders bevorzugt 20:80 bis 80:20.

In einer Ausführungsform umfasst der Alkohol nur eine alkoholische Komponente. In einer weiteren Ausführungsform umfasst der Alkohol mehrere, voneinander verschiedene alkoholische Komponenten.

In einer Ausführungsform ist der Alkohol ausgewählt aus Ethanol und/oder Ethylenglycol.

Erfindungsgemäß enthält die Elektrolytlösung Schwefelsäure und/oder mindestens ein Salz, ausgewählt aus Sulfat- und/oder Hydrogensulfat- und/oder Perchlorat- und/ oder Persulfat-Salz.

Im Sinne der Erfindung umfasst das Salz entweder nur eine Salzkomponente oder eine Mischung mehrerer Salzkomponenten.

In einer Ausführungsform ist das Salz ein anorganisches Salz.

In einer Ausführungsform ist das anorganische Salz ausgewählt aus (NH₄)₂SO₄ und/oder K₂SO₄ und/oder Na₂SO₄ und/oder KHSO4 und/oder NaHSO₄ und/oder einem Persulfat.

In einer Ausführungsform ist das Salz ein organisches Salz. In einer Ausführungsform ist das organische Salz ausgewählt aus Tetraalkylammoniumsulfaten und/oder Tetraalkylammoniumhydrogensulfaten.

Das Kation des Salzes entspricht also der allgemeinen Formel NR₄⁺, mit R = H und/oder C1-bis C5-Alkyl, wobei alle R gleich oder voneinander verschieden sein können.

Im Schritt a) werden die Elektroden mit der Elektrolytlösung in Kontakt gebracht.

In einer Ausführungsform werden die Elektroden in die Elektrolytlösung getaucht. In einer weiteren Ausführungsform wird die Elektrolytlösung zu den Elektroden in der Elektrolysezelle gegeben.

Im Schritt b) erfolgt die elektrolytische Exfolierung des Grundmaterials durch Anlegen einer Spannung zwischen erster und zweiter Elektrode.

In einer Ausführungsform beträgt die Spannung 1 bis 30 V, bevorzugt 5 bis 15 V, besonders bevorzugt 8 bis 12 V, insbesondere 10 V.

Erfindungsgemäß enthält mindestens die erste Elektrode E1 das zweidimensional strukturierte, geschichtete, kohlenstoffbasierte Grundmaterial. Diese Elektrode E1 wird als Anode geschaltet. Durch Anlegen einer Spannung, erfolgt im Anodenbereich zunächst die Bildung von sauerstoffhaltigen Radikalen wie HO oder O welche die Grenzflächen oder intrinsischen Defekte des Grundmaterials angreifen und daran addieren, wobei sich Oxide des Grundmaterials bilden. Gleichzeitig werden die Randschichten des Grundmaterials auseinandergetrieben, sodass sich die Anionen des Elektrolyten, das heißt, Sulfat- und/oder Hydrogensulfationen, weit dazwischenschieben können und den Abstand der einzelnen Schichten des Grundmaterials aufdehnen.

Die Interkalation der Anionen des Elektrolyten führt zur Aufweitung des Abstands zwischen den Schichten, soweit, dass die zwischenmolekularen Kräfte überwunden werden können, sodass sich einzelne Schichten von der Elektrode abspalten. Somit erfolgt die Exfoliation einer Monolage oder Mehrfachlage oder einer dünnen Schicht des Grundmaterials von der Elektrode.

Diese Monolagen oder Mehrfachlagen oder Schichten des Grundmaterials werden in situ mit der in der Elektrolytlösung enthaltenen oder zugegebenen organischen Verbindung beschichtet bzw. funktionalisiert.

Erfindungsgemäß wird der Elektrolytlösung vor und/oder während der elektrolytischen Exfolierung mindestens eine organische Verbindung zugegeben.

Erfindungsgemäß ist die mindestens eine organische Verbindung ausgewählt aus
a. Monomeren elektrisch leitender Polymere, welche anodisch oxidativ polymerisiert werden, und/oder
b. frei radikalisch polymerisierbaren, wasserlöslichen Vinyl-Monomeren, welche in ihrer Struktur mindestens eine Amidgruppe (bspw. Isopropylacrylamid) und/oder mindestens eine anionische funktionelle Gruppe (bspw. SO₃⁻, NO₂⁻, CO₂⁻², PO₃⁻³, O⁻) aufweisen (bspw. Styrensulfonat) und welche an der Anode frei radikalisch polymerisieren.

Die Varianten a. und b. lassen sich dabei beliebig miteinander kombinieren.

Durch das Anlegen einer Spannung zwischen den Elektroden E1 und E2 wandern/diffundieren die anodisch oxidierbaren, organische Moleküle, auf Grund ihrer partiell negativen Ladung in den Anodenbereich und werden dort elektrolytisch oxidiert, das heißt, ein Elektron wird abstrahiert. Dabei bilden sich Radikale gemäß folgender Gleichungen:

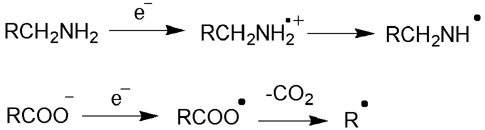

Diese Radikale reagieren mit der Oberfläche des Halbeiter- und/oder Leitermaterials und funktionalisieren dieses, indem sie eine Beschichtung aus Molekülen bilden.

Erfindungsgemäß ist die organische Verbindung in Variante a. ausgewählt aus anodisch oxidativ polymerisierbaren Monomeren elektrisch leitfähiger Polymere.

In einer Ausführungsform sind die Monomere der elektrisch leitenden Polymere in Variante a. ausgewählt aus aromatischen Aminen, Anilin, Pyrrol und Thiophen.

In einer Ausführungsform sind die elektrisch leitenden Polymere in Variante a. ausgewählt aus substituierten und/oder unsubstituierten Polyanillinen, Polypyrrolen, und/oder Polythiophenen.

In einer Ausführungsform ist ein substituiertes Polyanilin sulfoniertes Polyanilin.

Die Funktionalisierung des Leiter- oder Halbleitermaterials erfolgt mit den Verbindungen nach Variante a. durch oxidative Polymerisation.

Genauso wie bei einer Funktionalisierung mit kleinen organischen anodisch oxidierbaren Molekülen interkalieren während der Elektrolyse zunächst die Anionen des Elektrolyten zwischen die einzelnen Schichten des Grundmaterials und treiben diese auseinander, bis sie sich abspalten. Parallel dazu werden die Monomere der elektrisch leitfähigen Polymere anodisch oxidiert, das heisst, ein Elektron abstrahiert, sodass sich Radikalkationen bilden.

Diese reagieren mit der Oberfläche des exfolierten Halbeiter- oder Leitermaterials und polymerisieren dort weiter. Dadurch bildet sich eine Polymerbeschichtung auf den Mono- und/oder Mehrfachlagen oder Schichten des Leitermaterials und funktionalisiert diese.

Durch den Prozess der elektrochemischen Exfolierung befinden sich freie Radikale an der Oberfläche des EG, welche durch das ausgedehnte Netzwerk konjugierter Elektronen stabilisiert sind. Diese Radikal- und Anionen können als Ausgangspunkt für frei-radikalische und oxidative Polymerisationsreaktionen genutzt werden um auf diese Weise die Graphenoberfläche kovalent zu funktionalisieren. Ein weiterer möglicher Mechanismus ist die Aktivierung von sauerstoffhaltigen Gruppen (ins. Epoxid) an der Graphenoberfläche durch die elektrochemische Exfolierung.

Erfindungsgemäß ist die organische Verbindung in Variante b. ausgewählt aus frei radikalisch polymerisierbaren, wasserlöslichen Vinyl-Monomeren, welche in ihrer Struktur wenigstens eine Amidgruppe und/oder eine anionische funktionelle Gruppe aufweisen und welche an der Anode frei radikalisch polymerisieren (Tabelle 1).

In einer Ausführungsform ist die anionische funktionelle Gruppe ausgewählt aus SO₃⁻, NO₂⁻, CO₂⁻², PO₃⁻³, O⁻ (bspw. Isopropylacrylamid oder Styrensulfonat).

**Tabelle 1**

| **Funktionelle Gruppe** | **Zeitpunkt der Zugabe des Moleküls** | **Hinweise / Beispiele/ Funktionalisierungsmechanismen** |
|---|---|---|
| 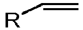 "Vinyl-Verbindungen" R:aromatic and aliphatic | vor/während | Polymerisation (frei radikalisch , kationisch) z.B.: N-Isopropylacrylamid, Methylenebisacrylamid, Natrium-4-vinylbenzensulfonat |

In Variante b. des erfindungsgemäßen Verfahrens erfolgt die freie radikalische Polymerisation der wasserlöslichen Vinyl-Monomere.

Vinylmonomere würden, basierend auf der Reduktionsreaktion der Vinylgruppe, normalerweise an der Kathode polymerisieren (Mechanismus der anionischen Polymerisation). Für derartige Reaktionen werden typischerweise im Stand der Technik wasserfreie organische Lösungsmittel unter Schutzgasatmosphäre eingesetzt.

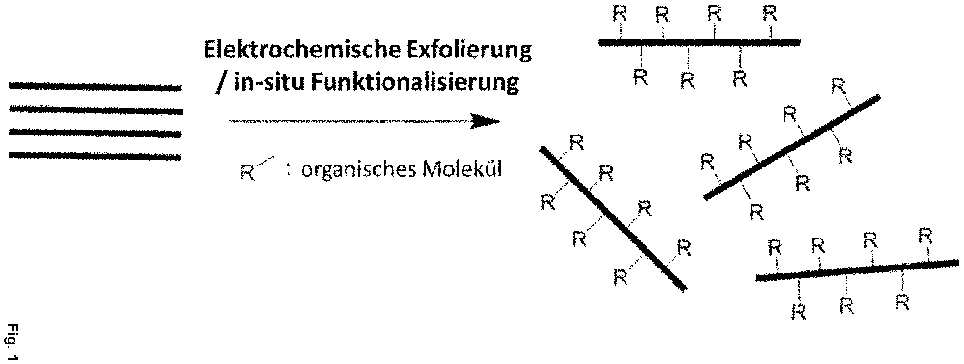

Wenn solche Monomere jedoch funktionelle Gruppen enthalten, welche schneller oxidieren als die Vinylgruppe reduziert wird, oder wenn sie anionische Gruppen wie SO₃⁻, NO₂⁻, CO₂⁻, PO₃⁻ enthalten, bewegen sie sich zur Anode und können, aktiviert durch freie Radikale aus der Wasserspaltung, eine freie radikalische Polymerisation durchführen (siehe Abbildung 1).

Diese Art der Polymerisation ist beispielsweise für Monomere wie Isopropylacrylamid und Vinylmonomere (siehe beispielsweise Abb. 1 b), enthaltend anionische Gruppen (wie beispielsweise Natrium-4-vinylbenzolsulfonat, Abb. 1b) erfolgreich durchgeführt.

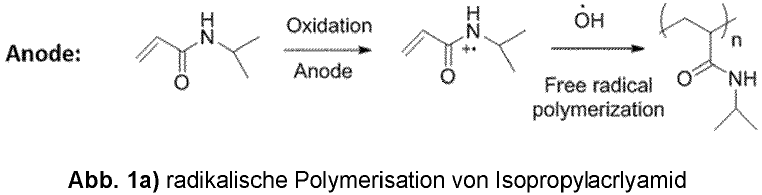

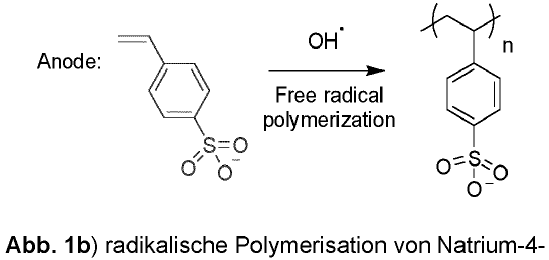

Überraschend zeigte sich, dass die Polymerisation in Gegenwart des exfolierten Leiter- oder Halbleitermaterials zu Polymer-funktionalisiertem Leiter- oder Halbleitermaterial führte.

Im Schritt c) des erfindungsgemäßen Verfahrens wird das funktionalisierte Halbleiter- oder Leitermaterial, beispielsweise in Form von Partikeln, aus der Elektrolytlösung abgetrennt Dem Fachmann sind Trennmethoden bekannt.

In einer Ausführungsform wird das funktionalisierte Material nach der Abtrennung getrocknet und dispergiert.

Die Herstellung von höher konzentrierten und stabilen Dispersionen ist aus dem Stand der Technik bisher nur unter dem Einsatz von Additiven, wie beispielsweise Tensiden, möglich. Mit Tensiden können nahezu beliebig hohe Füllstoffgehalte der Dispersionen in verschiedenen Lösungsmitteln oder Medien eingestellt werden.

Tenside wirken sich allerdings nachteilig auf Wechselwirkungen mit der Matrix aus (bspw. in Polymerkompositen) und verringern die Leitfähigkeit und Stabilität der aufgebrachten Halbleiter- oder Leiterschichten, beispielsweise in Print-Anwendungen. Die Tenside müssen hierbei in einem aufwändigen Prozess nachträglich ausgewaschen oder thermisch entfernt werden. Das erschwert die Prozessierung und ist zudem noch äußert kosten- und energieintensiv.

Weiterhin ist die Dispergierung bisher in ökologisch und ökonomisch weniger vorteilhaften Lösungsmitteln wie DMF oder NMP bekannt.

Vorteilhaft ist die Dispergierung des erfindungsgemäß funktionalisierten Materials nicht nur in organischen, wasserfreien, sondern insbesondere auch in Wasser oder wässrigen Lösungsmitteln ohne den Zusatz von Tensiden möglich, womit eine wesentlich bessere Umweltverträglichkeit sowie geringere Kosten möglich sind.

Wässrige Lösungsmittel im Sinne der Erfindung sind homogene Lösungsmittel, die auch einen Anteil Wasser enthalten.

Vorteilhaft ist die Dispergierung nicht nur in Wasser oder wässrigen Lösungsmitteln oder organischen Lösungsmitteln, sondern auch in einem breiten Spektrum an Reaktanden, beispielsweise Polymerisationspräkusoren, Epoxiden, Silikonen ohne den Einsatz von Additiven wie Tensiden möglich.

Vorteilhaft sind die erfindungsgemäß hergestellten Dispersionen auch ohne den Zusatz von solchen Additiven über einen langen Zeitraum stabil. Entgegen allem Stand der Technik kann diese Stabilität sogar ausschließlich in Wasser erzielt werden. Die so gebildeten Dispersionen können einfach prozessiert werden, was beispielsweise in der Beschichtung von Substraten mit dem funktionalisieren Leiter- oder Halbleitermaterial von Vorteil ist.

In einer Ausführungsform erfolgt die Dispergierung in einem Lösungsmittel ausgewählt aus Wasser und/oder Alkoholen.

In einer Ausführungsform ist das Lösungsmittel wässrig und alkoholisch, das heißt, es enthält eine Mischung aus Wasser und Alkohol.

In einer Ausführungsform ist das Volumen-Verhältnis Wasser/ Alkohol 0:100 bis 100: 0, bevorzugt 99:1 bis 1:99, besonders bevorzugt 80:20 bis 20:80.

In einer Ausführungsform umfasst der Alkohol nur eine alkoholische Komponente. In einer weiteren Ausführungsform umfasst der Alkohol mehrere, voneinander verschiedene alkoholische Komponenten.

In einer Ausführungsform ist der Alkohol ausgewählt aus Ethanol und/oder Ethylenglycol.

In einer Ausführungsform beträgt die Konzentration des funktionalisierten Materials in wässrigen und/oder alkoholischen Dispersionen 0.1 bis 100 g/l, bevorzugt 0,1 bis 10 g/l, besonders bevorzugt 0.1 bis 2 g/l, insbesondere 0,1 bis 1 g/l.

Vorteilhaft sind also wesentlich höher konzentrierte Dispersionen, als bisher aus dem Stand der Technik bekannt, ohne den Einsatz von die Grenzflächenspannung modifizierenden Additiven wie beispielsweise Tensiden, realisierbar.

Durch die erfindungsgemäße Funktionalisierung des Halbleiter- oder Leitermaterials ist damit erstmals eine Verarbeitbarkeit oder Prozessierung des Materials, beispielsweise auf Elektroden oder Substraten, aus verschiedensten Medien heraus möglich.

Beispielsweise konnten stabile Dispersionen von Graphen, welches erfindungsgemäß, mit Polyanilin (EG-PANI) funktionalisiert, hergestellt wurde, in hohen Konzentrationen in Wasser oder Ethylenglycol erzeugt werden. Ebenso gelang die Herstellung von Dispersionen von mit sulfoniertem Polyanilin funktionalisierten Graphen (EG-SPANI) in Wasser, Ethanol und Ethylenglycol. Weitere Beispiele sind in Tabelle 2 aufgeführt

| Entry | Product | Solvent | Stable Concentration (mg/mL) |
|---|---|---|---|
| 1a | EG-SPANI | Water | 0.4 bis 2 |
| 1b | EG-SPANI | Water | 100* |
| 2a | EG-SPANI | Ethanol | 0.5 bis 1 |
| 2b | EG-SPANI | Ethanol | 80* |
| 3 | EG-SPANI | Ethylene glycol | 1 |
| 4 | EG-SPANI | DMF | 1 |
| 5 | EG-PANI | Water | 0.1-0.2 |
| 6 | EG-PANI | Ethanol | 0.3-0.4 |
| 7 | EG-PANI | Ethylene glycol | 0.5-0.6 |
| 8 | EG-PPy | Water | 0.1-0.2 |
| 9 | EG-PPy | Ethanol | 0.3-0.4 |
| 10 | EG-PPy | Ethylene glycol | 0.5-0.6 |
| 11 | EG-PNIPAM | water | 0.3-0.4 |
| 12 | EG-PSS | water | 0.4 |
| 13 | EG-PAM | water | 0.25 |

| | | | |
|---|---|---|---|
| *: Dispersion in Pastenform mit deutlich höherer Viskosität als der des Grundlösungsmittels | | | |

**Tabelle 2:** Beispiele für stabile Dispersionen verschiedener erfindungsgemäß hergestellter Materialien in verschiedenen Medien und verschiedenen Konzentrationen:
- EG-SPANI = Exfoliertes Graphen, mit sulfoniertem Polyanilin funktionalisiert,
- EG-PANI = Exfoliertes Graphen, mit Polyanilin funktionalisiert,
- EG-PPy = Exfoliertes Graphen, mit Polypyrrol funktionalisiert,
- EG-PNIPAM = Exfoliertes Graphen, mit Poly(N-isopropylacrylamid) funktionalisiert,
- EG-PSS = Exfoliertes Graphen, mit Poly(styrenesulfonat) funktionalisiert,
- EG-PAM = Exfoliertes Graphen, mit Poly(Methylen-bis-acrylamid) funktionalisiert.

Im Sinne der Erfindung versteht man unter anorganischen und/oder organischen flüssigen Medien sowohl reine als auch aus mehreren Komponenten bestehende Lösungsmittel oder Monomere oder Silikone oder Mischungen dieser.

Sinnvollerweise bleibt die Dispersion frei von Grenzflächenspannung modifizierenden Verbindungen wie beispielsweise Tensiden, Detergenzien oder Emulgatoren.

Vorteilhaft weist das erfindungsgemäß hergestellte Leiter- oder Halbleitermaterial eine besonders geringe Defektdichte auf. RAMAN Messungen verdeutlichen, dass durch die Funktionalisierung des exfolierten Materials mit kleinen organischen Molekülen oder Polymeren die Oberfläche des Grundmaterials während der Exfolierung vor Sauerstoffradikalen geschützt wird. Dies wird durch besonders niedrige I_{D}-I_{G}-Verhältnisse deutlich.

Beispielsweise zeigt erfindungsgemäß hergestelltes EG-PANI ein I_{D}-I_{G}-Verhältnis von 0,12 oder erfindungsgemäß hergestelltes EG-PPy ein I_{D}-I_{G}-Verhältnis 0,13 auf.

Für die Realisierung der Erfindung ist es auch zweckmäßig, die vorbeschriebenen erfindungsgemäßen Ausgestaltungen, Ausführungsformen und Merkmale der Ansprüche in zweckmäßig miteinander zu kombinieren.

Nachfolgende Ausführungsbeispiele sollen die Erfindung näher erläutern, ohne diese jedoch darauf zu beschränken:

### Ausführungsbeispiele

Die vorliegende Erfindung ist durch die nachfolgenden Abbildungen und Ausführungsbeispiele näher beschrieben, ohne dass durch diese eine Einschränkung der Breite der vorab definierten Ansprüche gegeben sein soll:
- **Fig. 1:**: Schematische Illustration der in-situ Exfolierung und Funktionalisierung von Graphit,
- **Fig. 2:**: Vorgeschlagener Mechanismus der in-situ Funktionalisierung,
- **Fig. 3:**: RAMAN Spektren von a) EG und b) PPy-funktionalisiertem EG,
- **Fig. 4:**: a) XPS Übersichtsspektren von EG und EG-PPy, b) hochaufgelöstes XPS-Spektrum der C1s-Region von EG, c) hochaufgelöstes XPS-Spektrum der C1s-Region von EG-PPY und d) hochaufgelöstes XPS-Spektrum der N1s-Region von EG-PPY,
- **Fig. 5:**: RAMAN Spektrum von PANI-funktionalisiertem EG,
- **Fig. 6:**: a) hochaufgelöstes XPS-Spektrum der C1s-Region von EG-PANI und b) hochaufgelöstes XPS-Spektrum der N1s-Region von EG-PANI,
- **Fig. 7:**: a) TGA, b) AFM und c) RAMAN Analysen von SPANI-funktionalisiertem EG (EG-SPANI),
- **Fig. 8:**: XPS Analyse von EG-SPANI: a) Übersichtsspektrum und hochaufgelöste XPS-Spektren b) der C1s-Region, c) der S2p-Region und d) der N1s-Region,
- **Fig. 9:**: Schematische Illustration der Massenproduktion von EG-SPANI (= Exfoliertes Graphen, mit sulfoniertem Polyanilin funktionalisiert) durch ein Durchlaufsystem,
- **Fig. 10:**: a) TGA und b) AFM Analysen von PNIPAM-funktionalisiertem EG (EG-PNIPAM),
- **Fig.11:**: XPS Analyse von EG-PNIPAM a) Übersichtsspektrum und b) hochaufgelöstes Spektrum der N1s-Region,
- **Fig. 12:**: TGA Analysen von a) EG funktionalisiert mit Polymethylenbisacrylamid (PAM) b) EG funktionalisiert mit sulfoniertem Polystyrol,
- **Fig. 13:**: a) TGA, b) XPS-Übersichtsspektrum und c) XPS N1s-Region Analysen eines Butylamin-funktionalisierten EG d) erhöhter Butylamin-Funktionalisierungsgrad nachgewiesen durch TGA,
- **Fig 14:**: a) TGA und b) XPS-Spektren von, mittels Valeriansäure, Pentyl-funktionalisiertem EG,
- **Fig. 15:**: Vorgeschlagener Mechanismus für die direkte post-Funktionalisierung von EG unmittelbar nach der Exfolierung,
- **Fig. 16:**: a, b) RAMAN und c) TGA Spektren von Polypyrrole-funktionalisiertem EG mittels direkter post-Funktionalisierung,
- **Fig. 17:**: XPS Analyse von Polypyrrole-funktionalisiertem EG mittels direkter post-Funktionalisierung, a) Übersichtsspektrum, b) C1s-Region und c) N1s-Region,
- **Fig. 18:**: TGA Analyse von EG nach direkter post-Funktionalisierung mit a) Valeriansäure, b) Butylamin und tert-Octylamin,
- **Fig. 19:**: Zetapotential-Messungen wässriger Dispersionen funktionalisierter Graphene,
- **Fig. 20:**: Ladungs- und Entladungskurve einer Halbzellen-Lithiumionenbatterie mit LiCoO₂/EG-SPANI (90/10) als Kathodenmaterial,
- **Fig. 21:**: Zyklische Voltametrie Messungen von 3-Elektodenzellen Superkondensatoren mit einem freistehenden Film von funktionalisiertem Graphen (EG-SPANI) als Elektrode.

### Charakterisierung der hergestellten Materialien

REM-Bilder wurden unter Verwendung eines Feldemissions-Rasterelektronenmikroskops (Gemini 1530 LEO) mit einer Beschleunigungsspannung von 10 keV erhalten. AFM-Charakterisierung wurde auf einem Veeco Nanoskop-Illa - Multimode Picoforce (Digital Instruments) durchgeführt. Raman-Spektroskopie und Kartierung wurde mit einem Bruker RFS 100/S Spektrometer (Laserwellenlänge 532 nm) durchgeführt. Die XPS-Analysen wurden an einem Thermo Scientific K-Alpha Röntgen-Photoelektronenspektrometer mit einem Grundkammerdruck zwischen ~ 10⁻⁸-10⁻⁹ mbar und einer Al-Anode als Röntgenstrahlungsquelle durchgeführt (Röntgenstrahlung von 1496 eV). Es wurden Spotgrößen von 400 µm verwendet. Übersichtsspektren wurden mit durchschnittlich 10 Scans, einer Durchlassenergie von 200,00 eV und einer Schrittweite von 1 eV aufgezeichnet. Hochauflösende Spektren wurden mit einem Durchschnitt von 10 Scans mit einer Durchlassenergie von 50,00 eV und einer Schrittweite von 0,1 eV aufgenommen. Die Flächenwiderstände der EG-Filme wurden mit einem Vier-Punkt-Widerstandsmesssystem unter Verwendung eines Keithley 2700-Multimeters (Sondenabstand: 0,635 mm, Rs = 4,532 V/I) gemessen.

### Ausführungsbeispiel 1

### Electrochemische Exfolierung und in situ Funktionalisierung von Graphit mit Polypyrrol und Herstellung einer Dispersion Polypyrrol-funktionalisiertem Graphens (EG-PPy)

Die Graphitexfolierung wurde in einem Zwei-Elektrodensystem durchgeführt, wobei Graphitfolien (2 cm×3cm, 100 mg pro Folie) (Alfa Aesar, 99.99 % Reinheit) als Arbeitsanoden und Goldfolien derselben Maße als Kathoden genutzt wurden. Die Goldelektroden wurden parallel zu den Graphitelektroden mit einem festen Abstand von 2 cm angeordnet. Der Elektrolyt für die Exfolierung wurde durch Lösen von Ammoniumsulfat (0,1M, 0,8g) in 60 ml entionisiertem Wasser hergestellt. Pyrrol (7 µl, "Reagent Grade", 98% Reinheit) wurde in 10 ml Wasser gelöst um eine 0,01 M Monomerlösung zu erhalten. Nachdem die Elektroden in den Elektrolyten getaucht wurden (6 cm² aktive Elektrodenfläche in der Lösung) wurde ein konstantes Potential von 10V angelegt um den Exfolierungsprozess zu starten, gleichzeitig wurde mittels einer Spritzenpumpe die Monomerlösung mit einer Rate von 20 ml/h zudosiert.

Nachdem die Exfolierung abgeschlossen und die Graphitfolie verbraucht war, wurden die suspendierten Graphenflocken über einen 0.2 µm PC (Polycarbonat) Filter abgetrennt und mit deionisiertem Wasser gewaschen. Der Waschprozess wurde dreimal wiederholt (3×400 mL) um etwaige Rückstände wie Ammoniumsulfat und Pyrrolmonomere auszuwaschen. Anschließend wurde das hellgraue Produkt (Polypyrrol-funktionalisiertes Graphen, EG-PPY, 60 mg) mittels milder Ultraschallbehandlung (30 min Ultraschallbad) in entionisiertem Wasser (30 ml) dispergiert. Diese Dispersion wurde 24h stehen gelassen um nicht exfolierte, nicht funktionalisierte Plättchen und größere Partikel sedimentieren zu lassen. Im Anschluss wurde die überstehende Dispersion abgenommen. Die so erhaltene wässrige Dispersion enthielt Graphen in einer Konzentration von 0,1-0,2 mg/ml und war über eine Woche stabil, das heißt, es fand keine Sedimentation der Partikel statt.

Für Dispersionen in anderen Lösungsmitteln wurde das Produkt (Polypyrrol-funktionalisiertes Graphen, EG-PPY, 60 mg) nach der Wäsche mit Wasser in beispielsweise Ethanol oder Ethylenglycol (jeweils 30 ml) mittels milder Ultraschallbehandlung analog dispergiert und 24h stehen gelassen. Die so erhaltenen Überstände ergaben stabile Dispersionen mit einem Graphengehalt von 0,2-0,3 mg/ml (Ethanol) und 0,5-0,6 g/ml (Ethylenglycol).

Die Reaktion wurde durch den Einsatz von dickeren Graphitfolien unter Beibehaltung der Elektrodenfläche im Elektrolyt und unter erhöhter Pyrrolkonzentration (im konstanten Verhältnis zum Gewicht der Graphitelektrode) aufskaliert.

Die erfolgreiche Funktionalisierung konnte mittels Röntgenphotoelektronenspektroskopie (XPS) nachgewiesen werden. Es ergab sich ein Sauerstoffgehalt von 11,46 Atom-% für EG und 9,52 Atom-% für EG-PPy.

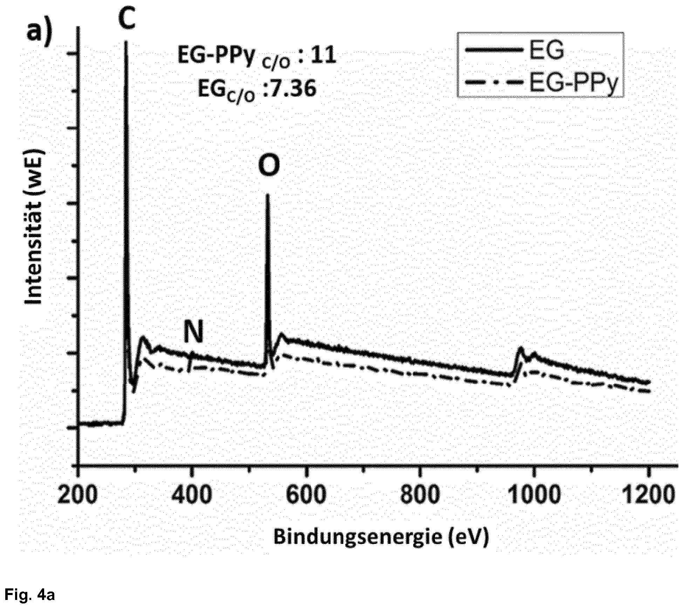

Im Falle von EG-PPy wurde, im Gegensatz zu EG, auch Stickstoff in einer Konzentration von 2,79 Atom-% nachgewiesen, welcher den Polypyrrolgruppen zuzuordnen ist **(****Fig. 4a****).**

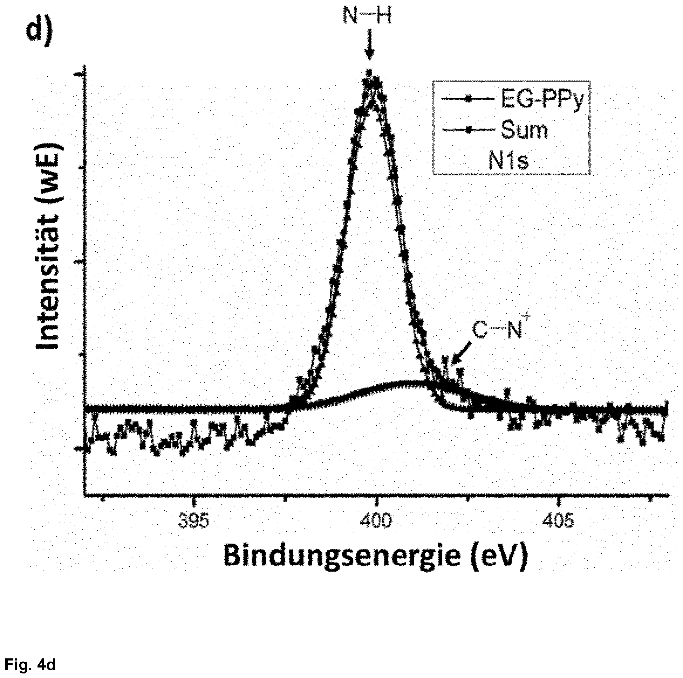

Das hochaufgelöste Spektrum der N1s-Region **(****Fig. 4d****)** zeigt eine Hauptbande bei 400 eV welche den -NH-Gruppen, sowie eine Bande bei 401 eV welche der Polaronstruktur (C-N⁺) von Polypyrrol zugeordnet werden können.

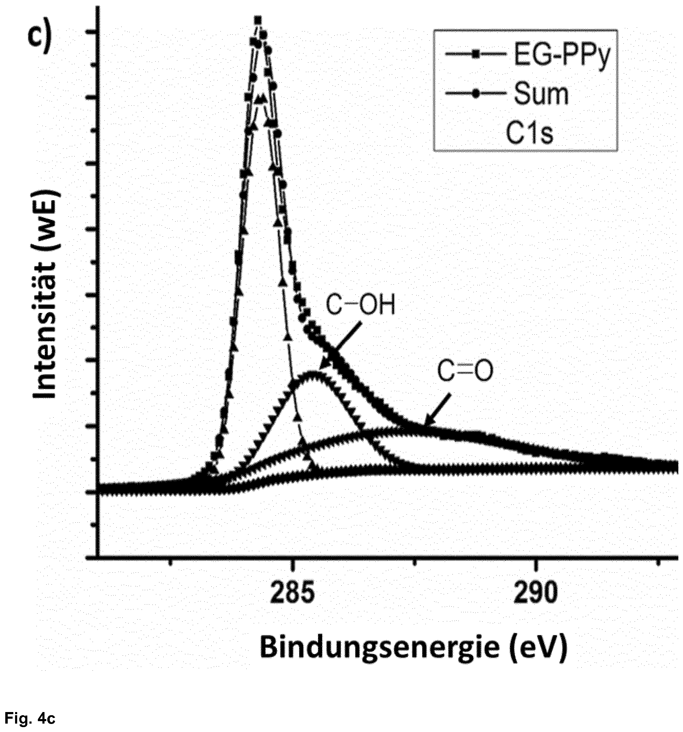

Das hochaufgelöste Spektrum der C1s-Region **(****Fig. 4c****)** zeigt drei Hauptbanden bei 284,35 eV, 285,4 eV und 287,2 eV, welche den C=C, C-OH und C=O Bindungen zugeordnet werden können.

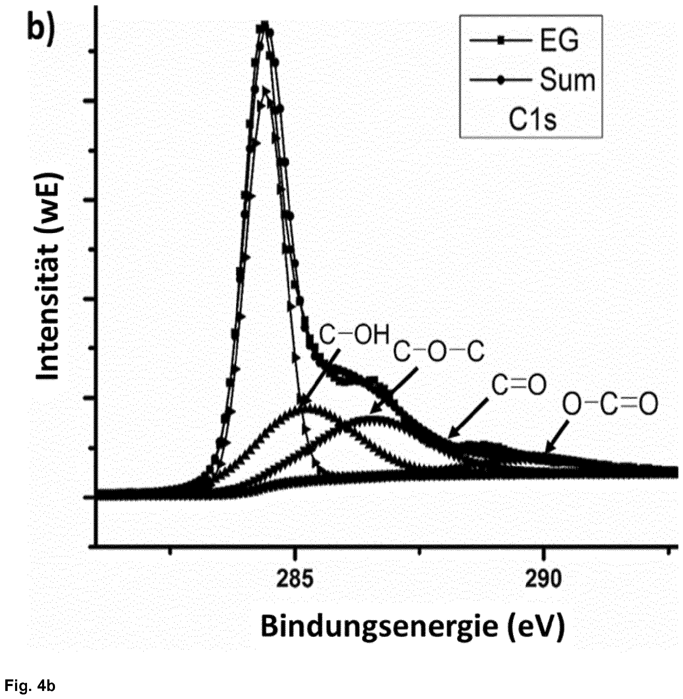

Im Gegensatz dazu zeigt unfunktionalisiertes EG fünf verschieden Banden **(****Fig. 4b****).** Zusätzlich zu den Banden bei 284,4 eV, 285,2 eV und 287,2 eV (C=C, C-OH und C=O Bindungen) treten hier zwei weiter Banden bei 286,5 eV und 290,2 eV auf, welche Epoxid- (C-O-C) und Carboxylatgruppen (O-C=O) zuzuordnen sind (Abb. 4b). Die Abwesenheit von Epoxidgruppen im Falle des funktionalisierten EG zeigt, dass das Graphen während der Exfolierung einer weniger starken Oxidation unterliegt, was auf eine schützende Wirkung der PPy-Funktionalisierung der Basalebene zurückgeführt wird.

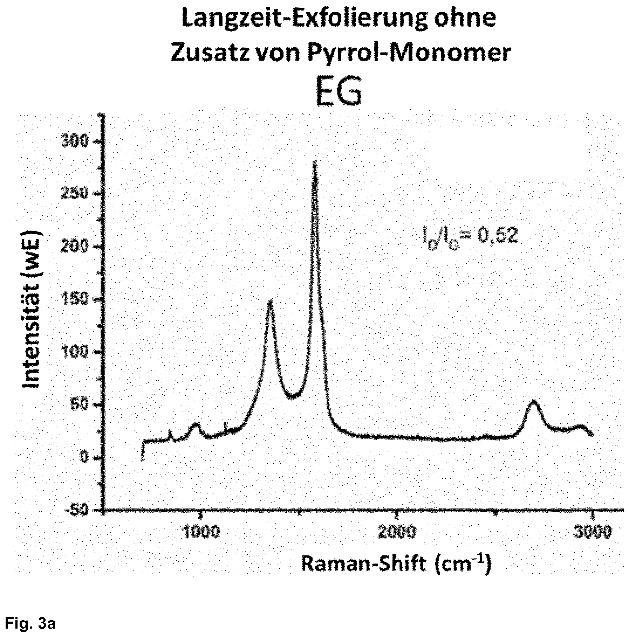

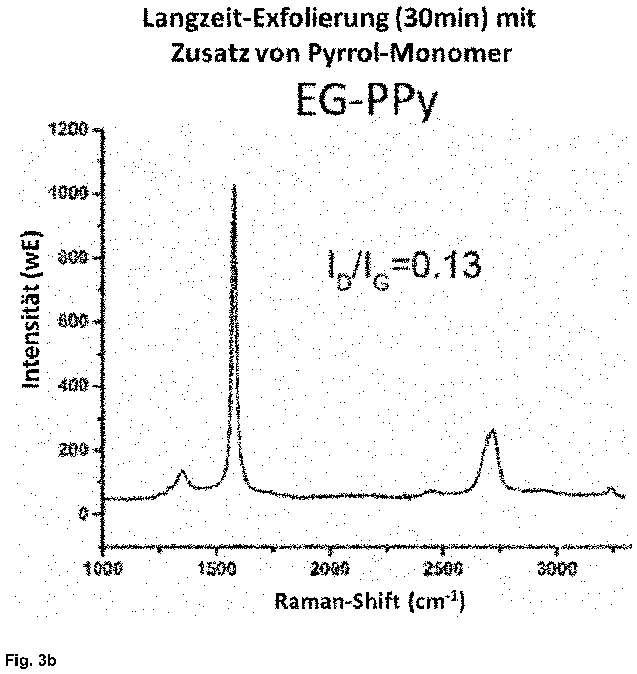

Die hohe Qualität des funktionalisierten Graphens kann mittels RAMAN Spektroskopie verdeutlicht werden. Während im Spektrum von EG ein relativ hohes Intensitätsverhältnis der D- und G-Peaks von 0,52 **(****Fig. 3a****)** auf ein erhebliches Maß an Defektstellen hindeutet (durch den Angriff von Hydroxylradikalen auf die freiliegenden Graphenflächen), kann durch die Zugabe der 0,01M wässrigen Pyrrollösung während der Exfolierung die Graphenoberfläche durch die gebildeten Polypyrrolfunktionalitäten geschützt werden, was durch ein niedriges I_{D}-I_{G}-Verhältnis von 0,13 verdeutlicht wird. **(****Fig. 3b****).**

Ein dünner Film von EG-PPy wurde mittels Filtration einer Dispersion auf einem PC-Filterpapier erzeugt. Der Schichtwiderstand des Films wurde mit einem Vier-Punkt-Widerstandsmesssystem und die Schichtdicke mittels REM ermittelt, woraus eine Leitfähigkeit von ca. 500 S/cm ermittelt wurde.

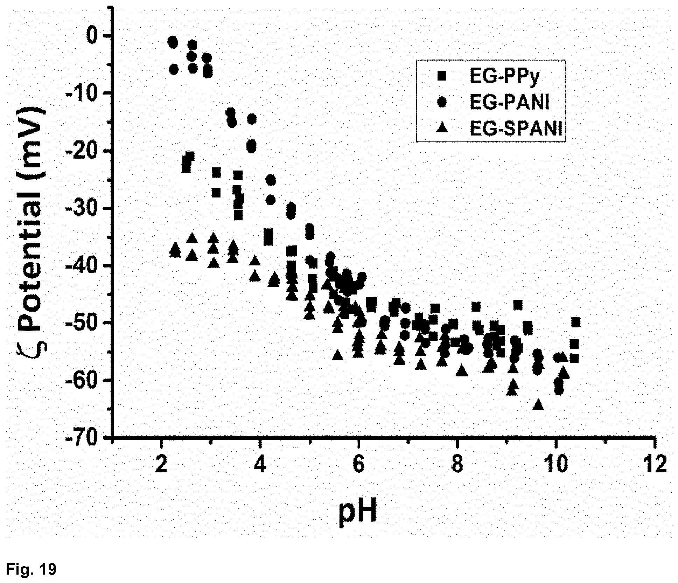

Zeta-Potentialmessungen von wässrigen Dispersionen zeigten die Stabilität von EG-PPy Dispersionen über einen breiten pH-Bereich **(****Fig. 19****)**

### Ausführungsbeispiel 2

### Electrochemische Exfolierung und in situ Funktionalisierung von Graphit mit Polyanilin und Herstellung einer Dispersion Polyanilin-funktionalisierten Graphens (EG-PANI)

Die Graphitexfolierung wurde in einem Zwei-Elektrodensystem durchgeführt, wobei Graphitfolien (2 cm×3cm, 100 mg pro Folie) (Alfa Aesar, 99.99 % Reinheit) als Arbeitsanoden und Goldfolien derselben Maße als Kathoden genutzt wurden. Die Goldelektroden wurden parallel zu den Graphitelektroden mit einem festen Abstand von 2 cm angeordnet. Der Elektrolyt für die Exfolierung wurde durch Lösen von Ammoniumsulfat (0,1M, 0,8g) in 60 ml entionisiertem Wasser hergestellt. Anilin (10 µL, Acros organics, 99.8 % Reinheit) wurde in 26 µL H₂SO₄ und 10 mL Wasser gelöst um eine 0,01 M Monomerlösung zu erhalten. Nachdem die Elektroden in den Elektrolyten getaucht wurden (6 cm² aktive Elektrodenfläche in der Lösung) wurde ein konstantes Potential von 10V angelegt um den Exfolierungsprozess zu starten, gleichzeitig wurde mittels einer Spritzenpumpe die Monomerlösung mit einer Rate von 15 ml/h zudosiert.

Nachdem die Exfolierung abgeschlossen und die Graphitfolie verbraucht war, wurden die suspendierten Graphenflocken über einen 0.2 µm PC (Polycarbonat) Filter abgetrennt und mit deionisiertem Wasser gewaschen. Der Waschprozess wurde dreimal wiederholt (3×400 mL) um etwaige Rückstände wie Ammoniumsulfat und Anilinmonomere auszuwaschen. Anschließend wurde das hellgraue Produkt (Polyanilin-funktionalisiertes Graphen, EG-PANI, 60 mg) mittels milder Ultraschallbehandlung (30 min Ultraschallbad) in entionisiertem Wasser (30 ml) dispergiert. Diese Dispersion wurde 24h stehen gelassen um nicht exfolierte, nicht funktionalisierte Plättchen und größere Partikel sedimentieren zu lassen. Im Anschluss wurde der Überstand abgenommen. Die so erhaltene wässrige Dispersion enthielt Graphen in einer Konzentration von 0,1-0,2 mg/ml und war über eine Woche stabil.

Für Dispersionen in anderen Lösungsmitteln wurde das Produkt (Polyanilin-funktionalisiertes Graphen, EG-PANI, 60 mg) nach der Wäsche mit Wasser beispielsweise in Ethanol oder Ethylenglycol (jeweils 30 ml) mittels milder Ultraschallbehandlung analog dispergiert und 24h stehen gelassen. Die so erhaltenen Überstände ergaben stabile Dispersionen mit einem Graphengehalt von 0,2-0,3 mg/ml (Ethanol) und 0,5-0,6 g/ml (Ethylenglycol).

Die Reaktion wurde durch den Einsatz von dickeren Graphitfolien unter Beibehaltung der Elektrodenfläche im Elektrolyt und unter erhöhter Anilinkonzentration (im konstanten Verhältnis zum Gewicht der Graphitelektrode) aufskaliert.

Die erfolgreiche Funktionalisierung konnte mittels Röntgenphotoelektronenspektroskopie (XPS) nachgewiesen werden.

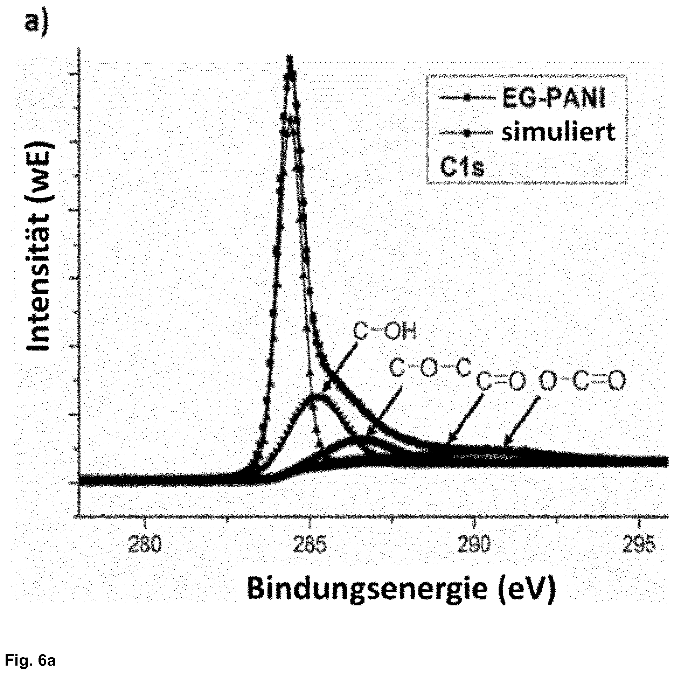

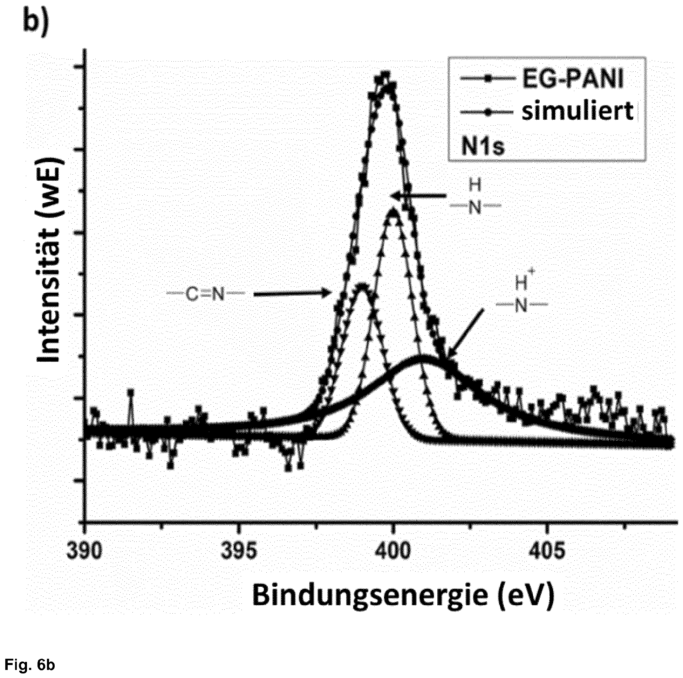

Es ergab sich ein Sauerstoffgehalt von 11,46 Atom-% für EG und 6,68 Atom-% für EG-PANI. Im Falle von EG-PANI wurde, im Gegensatz zu EG auch Stickstoff in einer Konzentration von 2,02 Atom-% nachgewiesen, welcher den Polyanilingruppen zuzuordnen ist **(****Fig. 6a**, 6b).

Das hochaufgelöste Spektrum der N1s-Region **(****Fig. 6b****)** zeigt drei Banden bei 399eV, 400 eV und 401 eV welche den C=N, -NH und -NH⁺-Gruppen, von Polyanilin zugeordnet werden können.

Das hochaufgelöste Spektrum der C1s-Region **(****Abb. 6a****)** zeigt drei Hauptbanden bei 284,4 eV, 285,2 eV und 286,5 eV, welche den C=C, C-OH und C=O Bindungen zugeordnet werden können, während der Anteil an Epoxy-Gruppen niedrig ist.

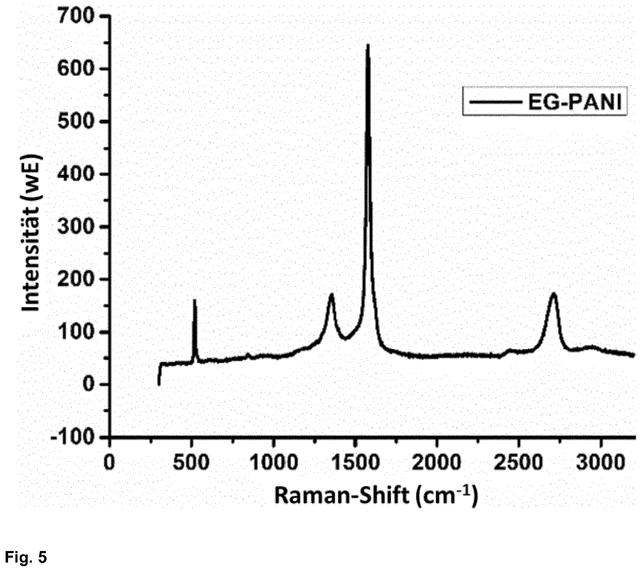

Die hohe Qualität und geringe Defektdichte des funktionalisierten Graphens kann mittels RAMAN Spektroskopie verdeutlicht werden. Durch die Zugabe der 0,01M wässrigen Anilinlösung während der Exfolierung kann die Graphenoberfläche durch die gebildeten Polyanilinfunktionalitäten geschützt werden, was durch ein niedriges I_{D}-I_{G}-Verhältnis von 0,12 verdeutlicht wird. **(****Fig. 5****).**

Ein dünner Film von EG-PANI wurde mittels Filtration einer Dispersion auf einem PC-Filterpapier erzeugt. Der Schichtwiderstand des Films wurde mit einem Vier-Punkt-Widerstandsmesssystem und die Schichtdicke mittels REM ermittelt, woraus eine Leitfähigkeit von ca. 400 S/cm ermittelt wurde.

Zeta-Potentialmessungen von wässrigen Dispersionen zeigten die Stabilität von EG-PANI Dispersionen im neutralen pH-Bereich und eine niedrige Stabilität unter sauren Bedingungen **(****Fig. 19****)**

### Ausführungsbeispiel 3

### Electrochemische Exfolierung und in situ Funktionalisierung von Graphit mit sulfoniertem Polyanilin und Herstellung einer Dispersion von EG-SPANI (= Exfoliertes Graphen, mit sulfoniertem Polyanilin funktionalisiert)

Die Graphitexfolierung wurde in einem Zwei-Elektrodensystem durchgeführt, wobei Graphitfolien (2 cm×3cm, 100 mg pro Folie) (Alfa Aesar, 99.99 % Reinheit) als Arbeitsanoden und Goldfolien derselben Maße als Kathoden genutzt wurden. Die Goldelektroden wurden parallel zu den Graphitelektroden mit einem festen Abstand von 2 cm angeordnet. Der Elektrolyt für die Exfolierung wurde durch Lösen von Ammoniumsulfat (0,1M, 0,8g) in 60 ml entionisiertem Wasser hergestellt. Anilinsulfonsäure (18 mg, Sigma-Aldrich, 95% Reinheit) wurde in 26 µL H₂SO₄ und 10 mL Wasser gelöst um eine 0,01 M Monomerlösung zu erhalten. Nachdem die Elektroden in den Elektrolyten getaucht wurden (6 cm² aktive Elektrodenfläche in der Lösung) wurde ein konstantes Potential von 10V angelegt um den Exfolierungsprozess zu starten, gleichzeitig wurde mittels einer Spritzenpumpe die Monomerlösung mit einer Rate von 15 ml/h zudosiert.

Nachdem die Exfolierung abgeschlossen und die Graphitfolie verbraucht war, wurden die suspendierten Graphenflocken über einen 0.2 µm PC (Polycarbonat) Filter abgetrennt und mit deionisiertem Wasser gewaschen. Der Waschprozess wurde dreimal wiederholt (3×400 mL) um etwaige Rückstände wie Ammoniumsulfat und Anilinmonomere auszuwaschen. Anschließend wurde das dunkelgraue Produkt (Polyanilinsulfonat-funktionalisiertes Graphen, EG-SPANI, 60 mg) mittels milder Ultraschallbehandlung (30 min Ultraschallbad) in entionisiertem Wasser (30 ml) dispergiert. Diese Dispersion wurde 24h stehen gelassen um nicht exfolierte, nicht funktionalisierte Plättchen und größere Partikel sedimentieren zu lassen. Im Anschluss wurde die überstehende Dispersion abgenommen. Die so erhaltene wässrige Dispersion enthielt Graphen in einer Konzentration von 0,3-0,4 mg/ml und war über eine Woche stabil.

Für Dispersionen in anderen Lösungsmitteln wurde das Produkt (Polyanilinsulfonat-funktionalisiertes Graphen, EG-SPANI, 60 mg) nach der Wäsche mit Wasser beispielsweise in Ethanol oder Ethylenglycol (jeweils 30 ml) mittels milder Ultraschallbehandlung analog dispergiert und 24h stehen gelassen. Die so erhaltenen Überstände ergaben stabile Dispersionen mit einem Graphengehalt von 0,4-0,5 mg/ml (Ethanol) und 0,8-1,0 g/ml (Ethylenglycol).

Die Reaktion wurde durch den Einsatz von dickeren Graphitfolien unter Beibehaltung der Elektrodenfläche im Elektrolyt und unter erhöhter Anilinkonzentration (im konstanten Verhältnis zum Gewicht der Graphitelektrode) aufskaliert.

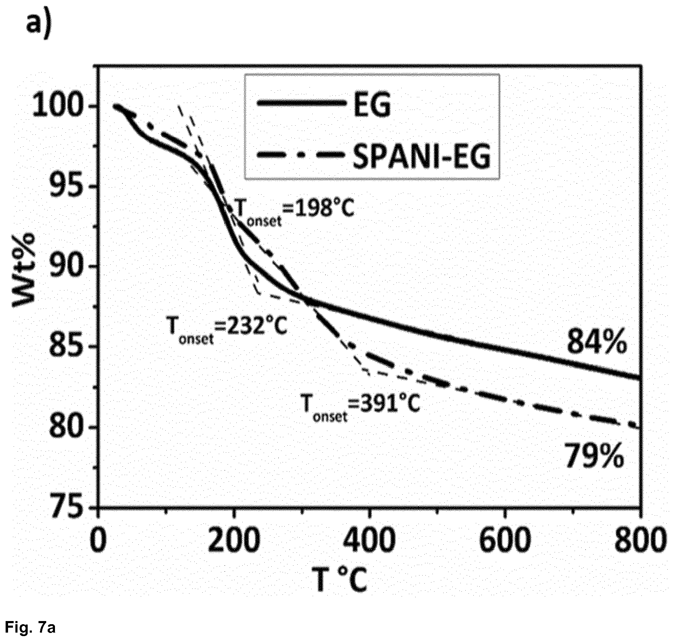

Die erfolgreiche Funktionalisierung konnte mittels Thermogravimetrie (TGA) nachgewiesen werden, wo das funktionalisierte EG-SPANI im Vergleich zu unfunktionalisiertem EG einen nahezu 5 wt.% höheren Masseverlust zeigte **(****Fig. 7a****).**

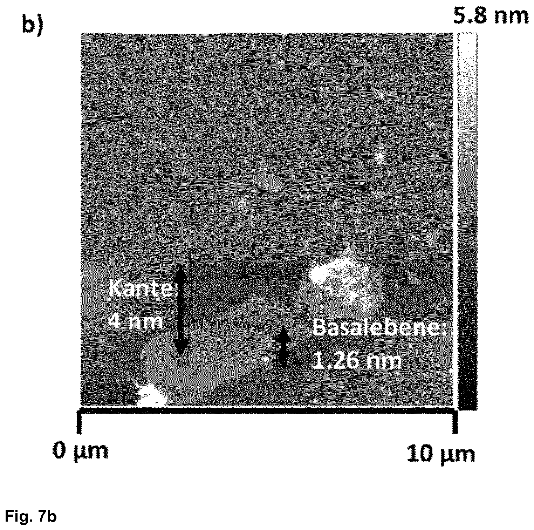

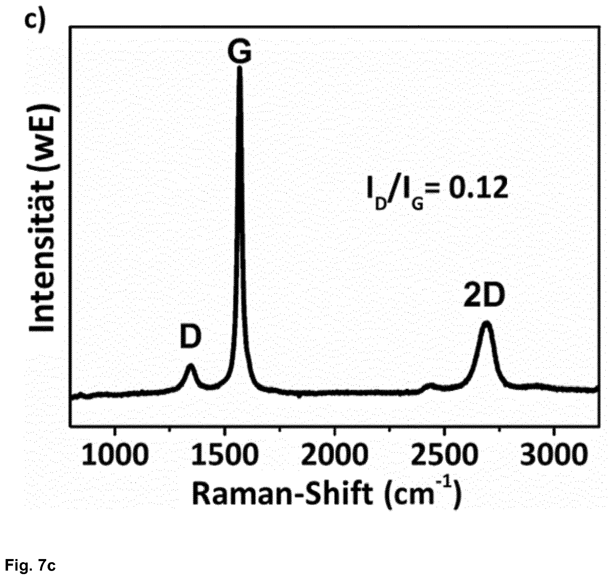

Die AFM-Untersuchungen zeigten eine Schichtdicke von 4 nm bzw. 1,2 nm für die Kanten und Basalebenen der Plättchen **(****Fig. 7b****).** RAMAN-Messungen ergaben ein niedriges I_{D}/I_{G}-Verhältnis von 0,12 und somit eine geringe Defektdichte **(****Fig. 7c****).**

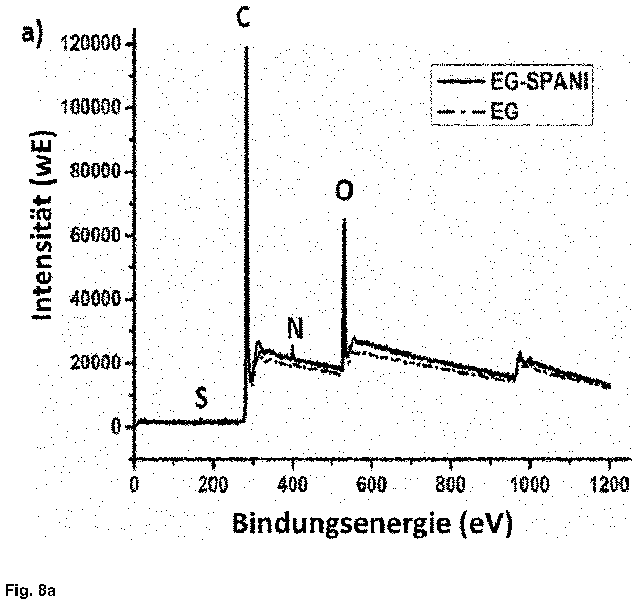

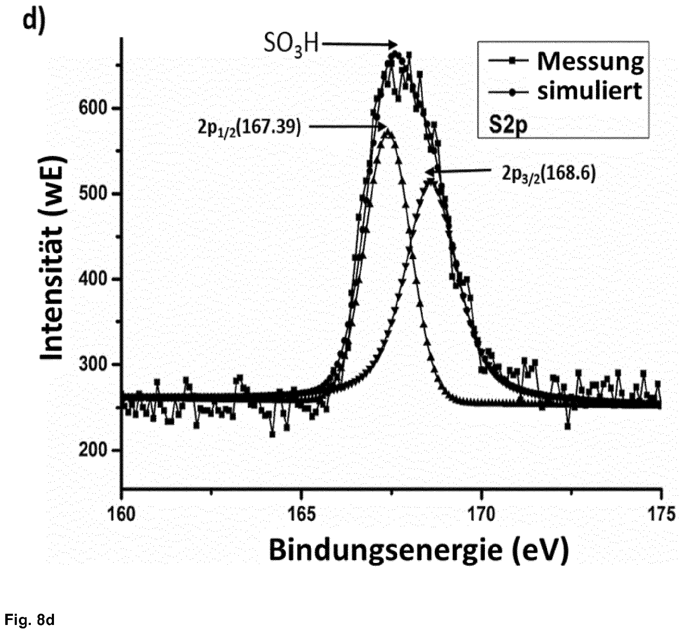

Mittels Röntgenphotoelektronenspektroskopie (XPS) konnten ein Stickstoffgehalt von 2,15 Atom-% und ein Schwefelgehalt von 0,62 Atom-% nachgewiesen werden, welche den Polyanilinsulfonatgruppen zuzuordnen sind **(****Fig. 8a****).**

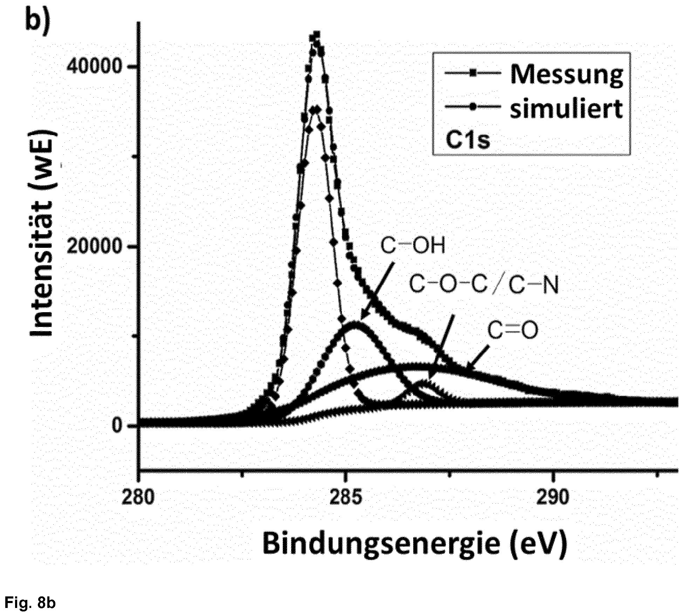

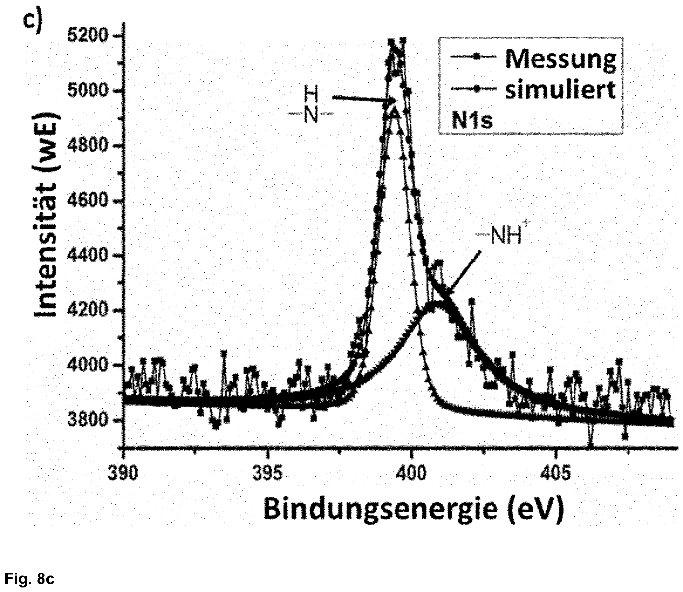

Das hochaufgelöste Spektrum der N1s-Region zeigt eine Hauptbande bei 400 eV welche den -NH-Gruppen, sowie die Bande bei 401 eV welche der Polaronstruktur (C-N⁺) von Polyanilinsulfonat zugeordnet werden können. Das hochaufgelöste Spektrum der C1s-Region **(****Fig. 8b****)** zeigt drei Hauptbanden bei 284,35 eV, 285,4 eV und 287.2 eV, welche den C=C, C-OH und C=O Bindungen zugeordnet werden können. Das hochaufgelöste Spektrum der Schwefel-Region **(****Fig. 8c****)** zeigt zwei Banden bei 167,4 eV und 168,6 eV welche den Sulfonsäure- bzw. Sulfonatgruppen des Polyanilinsulfonats zugeordnet werden können.

Ein dünner Film von EG-SPANI wurde mittels Filtration einer Dispersion auf einem PC-Filterpapier erzeugt. Der Schichtwiderstand des Films wurde mit einem Vier-Punkt-Widerstandsmesssystem und die Schichtdicke mittels REM ermittelt, woraus eine Leitfähigkeit von ca. 800 S/cm ermittelt wurde.

Zeta-Potentialmessungen von wässrigen Dispersionen zeigten die Stabilität von EG-SPANI Dispersionen in einem breiten pH-Bereich (3-10) mit einem Zeta-Potential von unter -40 mV **(****Fig. 19****)**

### Ausführungsbeispiel 4

### Massenproduktion von EG-SPANI (= Exfoliertes Graphen, mit sulfoniertem Polyanilin funktionalisiert) durch ein Durchlaufsystem und Dispergierung

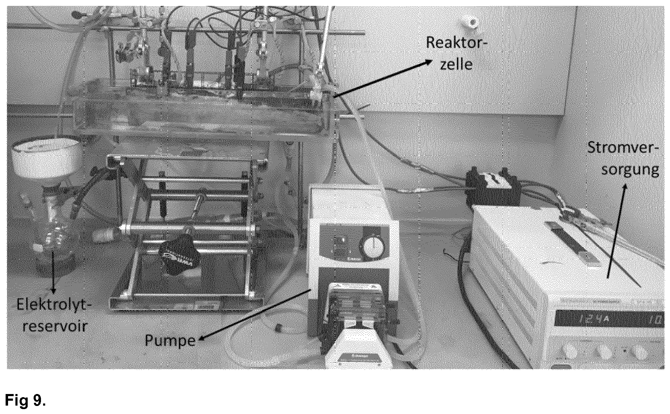

Die Graphitexfolierung wurde in einem Durchlaufsystem durchgeführt, wobei Graphitfolien (5 cm×30 cm, 2.3 g pro Folie) (Alfa Aesar, 99.99 % Reinheit) als Arbeitsanoden und Kupferfolien derselben Maße als Kathoden genutzt wurden. die Kupferelektroden wurden an der Reaktorwand befestigt, wo die Graphitelektroden von oben in den Elektrolyten eintauchen **(****Fig.9****).** Der Elektrolyt für die Exfolierung wurde durch Lösen von Ammoniumsulfat (0,1M, 46,2g), Anilinsulfonsäure (1g, Sigma-Aldrich, 95% Reinheit) und 1,4 mL H₂SO₄ in 3.5 L entionisiertem Wasser hergestellt und fließt kontinuierlich durch eine Pumpe mit konstanter Geschwindigkeit in das System. Nachdem die Elektroden in den Elektrolyten getaucht wurden (150 cm² aktive Elektrodenfläche in der Lösung) wurde ein konstantes Potential von 10V angelegt um den Exfolierungsprozess und Polymerisationprozess zu starten.

Nachdem die Exfolierung abgeschlossen und die Graphitfolie verbraucht war, wurden die suspendierten Graphenflocken über einen 0.2 µm PC (Polycarbonat) Filter abgetrennt und mit deionisiertem Wasser gewaschen. Der Waschprozess wurde dreimal wiederholt (2 L) um etwaige Rückstände wie Ammoniumsulfat und Anilinmonomere auszuwaschen. Anschließend wurde das dunkelgraue Produkt (Polyanilinsulfonat-funktionalisiertes Graphen, EG-SPANI, 2,2 g) mittels milder Ultraschallbehandlung (30 min, 30% Amplitude, 2 Watt) in entionisiertem Wasser (150 ml) dispergiert. Diese Dispersion wurde 24h stehen gelassen um nicht exfolierte, nicht funktionalisierte Plättchen und größere Partikel sedimentieren zu lassen. Im Anschluss wurde die überstehende Dispersion abgenommen. Die so erhaltene wässrige Dispersion enthielt Graphen in einer Konzentration von 0,5 mg/ml und war über mehrere Wochen stabil.

### Ausführungsbeispiel 5

### Elektrochemische Exfolierung und in situ Funktionalisierung von Graphit mit Poly-N-isopropylacrylamid und Herstellung einer Dispersion von EG-PNIPAM (= Poly-N-isopropylacrylamid-funktionalisiertes Graphen)

Die Graphitexfolierung wurde in einem Zwei-Elektrodensystem durchgeführt, wobei Graphitfolien (2 cm×3cm, 100 mg pro Folie) (Alfa Aesar, 99.99 % Reinheit) als Arbeitsanoden und Goldfolien derselben Maße als Kathoden genutzt wurden. Die Goldelektroden wurden parallel zu den Graphitelektroden mit einem festen Abstand von 2 cm angeordnet. Der Elektrolyt für die Exfolierung wurde durch Lösen von Ammoniumsulfat (0,1M, 0,8g) in 60 ml entionisiertem Wasser hergestellt. N-isopropylacrylamid (30 mg, 0.25 mmol, Sigma, Reinheit 97%) wurde in 10 mL Wasser gelöst um eine 0,02 M Monomerlösung zu erhalten. Nachdem die Elektroden in den Elektrolyten getaucht wurden (6 cm² aktive Elektrodenfläche in der Elektrolytlösung) wurde ein konstantes Potential von 10V angelegt um den Exfolierungsprozess zu starten, gleichzeitig wurde mittels einer Spritzenpumpe die Monomerlösung mit einer Rate von 20 ml/h zudosiert.

Nachdem die Exfolierung abgeschlossen und die Graphitfolie verbraucht war, wurden die suspendierten Graphenflocken über einen 0.2 µm PC (Polycarbonat) Filter abgetrennt und mit deionisiertem Wasser gewaschen. Der Waschprozess wurde dreimal wiederholt (3×400 mL) um etwaige Rückstände wie Ammoniumsulfat und Anilinmonomere auszuwaschen. Anschließend wurde das dunkelgraue Produkt (Poly-N-isopropylacrylamid-funktionalisiertes Graphen, EG-PNIPAM, 60 mg) mittels milder Ultraschallbehandlung (30 min Ultraschallbad) in entionisiertem Wasser (30 ml) dispergiert. Diese Dispersion wurde 24h stehen gelassen um nicht exfolierte, nicht funktionalisierte Plättchen und größere Partikel sedimentieren zu lassen. Im Anschluss wurde die überstehende Dispersion abgenommen. Die so erhaltene wässrige Dispersion enthielt funktionalisiertes Graphen in einer Konzentration von 0,3-0,4 mg/ml und war über eine Woche stabil.

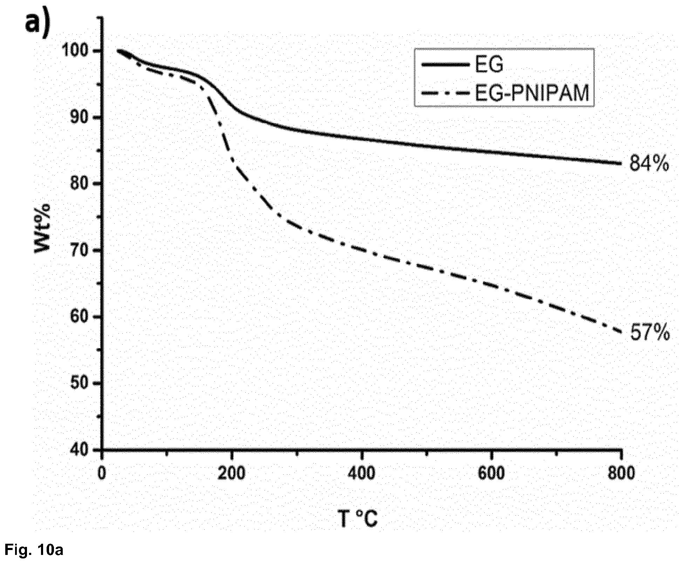

Die erfolgreiche Funktionalisierung konnte mittels TGA nachgewiesen werden, wo das funktionalisierte EG-PNIPAM im Vergleich zu unfunktionalisiertem EG über 40 wt.% Masseverlust zeigte **(****Fig. 10a****).**

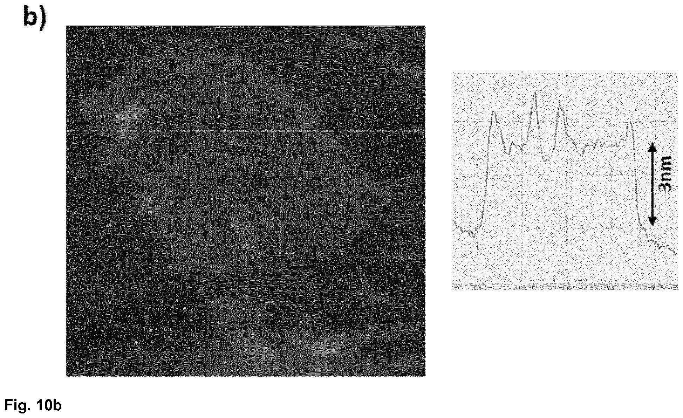

Die AFM-Untersuchungen zeigten eine Schichtdicke von 3 nm, was die Präsenz von funktionellen Gruppen auf der Oberfläche verdeutlicht **(****Fig. 10b****).**

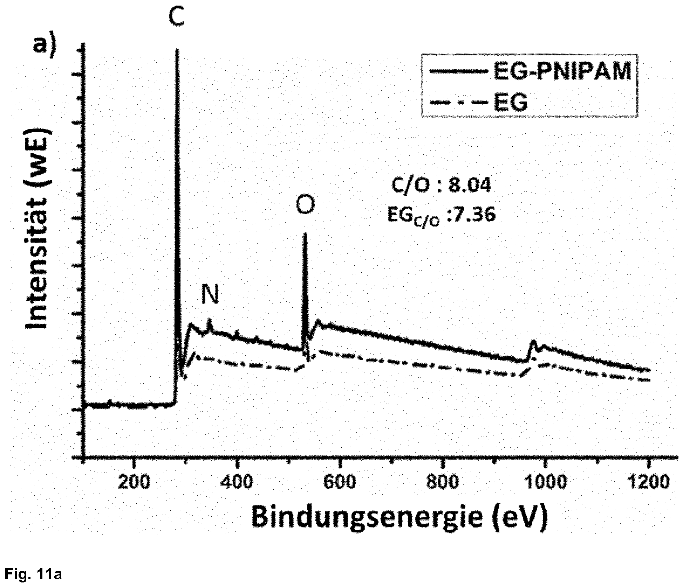

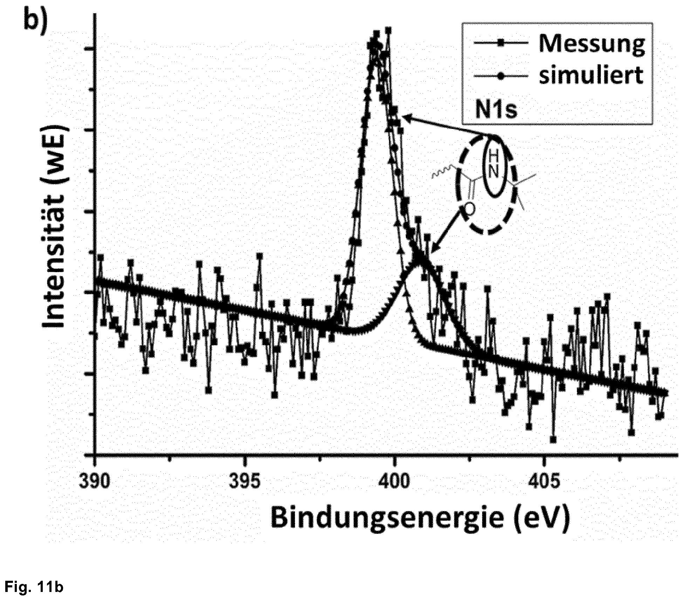

Mittels Röntgenphotoelektronenspektroskopie (XPS) konnten ein Stickstoffgehalt von 0,86 Atom-% und eine Erhöhung des C/O-Verhältnisses nachgewiesen werden, welche auf die PNIPAM-Funktionalisierung zurückzuführen sind **(****Fig. 11a****).** Das hochaufgelöste Spektrum der N1s-Region zeigt eine Hauptbande bei 400 eV welche den -NH-Gruppen, sowie die Bande bei 401 eV welche der Amidstruktur von PNIPAM zugeordnet werden können **(****Fig. 11b****).**

Ein dünner Film von EG-PNIPAM wurde mittels Filtration einer Dispersion auf einem PC-Filterpapier erzeugt. Der relativ hohe Schichtwiderstand des Films von -140 Ω/□ (mit einem Vier-Punkt-Widerstandsmesssystem bestimmt) ist auf das Vorhandensein des Isolators PNIPAM auf der Graphenoberfläche zurückzuführen.

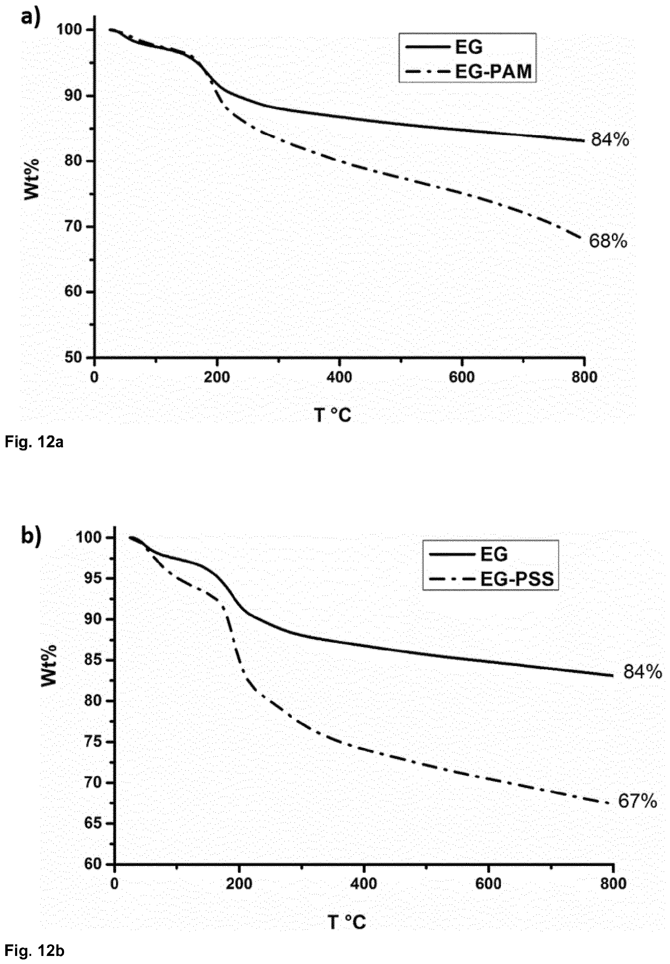

Das Verfahren wurde in analoger Weise auch mit anderen Vinylmonomeren, wie Methylenbis-acrylamid und Natrium-4-vinylbenzenesulfonat, erfolgreich durchgeführt welche an der Oberfläche des Graphens polymerisiert werden konnten. Die erfolgreiche Funktionalisierung mit Poly-(Methylen-bis-acrylamid) (PAM) und Poly-(Natrium-4-vinylbenzenesulfonat) (PSS) wurde analog Beispiel 4 mittels TGA nachgewiesen (**Fig. 12a** und **12b**).

Darüber hinaus konnten stabile wässrige Dispersionen mit EG-PAM (0,25 mg/ml) und EG-PSS (0,4 mg/ml) hergestellt werden.

### Vergleichsbeispiel 6

### Elektrochemische Exfolierung und in situ Funktionalisierung von Graphit mit Butylamin

Die Graphitexfolierung wurde in einem Zwei-Elektrodensystem durchgeführt, wobei Graphitfolien (2 cm×3cm, 100 mg pro Folie) (Alfa Aesar, 99.99 % Reinheit) als Arbeitsanoden und Goldfolien derselben Maße als Kathoden genutzt wurden. Die Goldelektroden wurden parallel zu den Graphitelektroden mit einem festen Abstand von 2 cm angeordnet. Der Elektrolyt für die Exfolierung wurde durch Lösen von Ammoniumsulfat (0,1M, 0,93g) und Butylamin (30 mg, 0.41 mmol, Aldrich, 99.5% Reinheit) in 70 ml entionisiertem Wasser hergestellt. Nachdem die Elektroden in den Elektrolyten getaucht wurden (6 cm² aktive Elektrodenfläche in der Elektrolytlösung) wurde ein konstantes Potential von 10V angelegt um den Exfolierungsprozess zu starten. Nachdem die Exfolierung abgeschlossen und die Graphitfolie verbraucht war, wurden die suspendierten Graphenflocken über einen 0.2 µm PC (Polycarbonat) Filter abgetrennt und mit deionisiertem Wasser gewaschen. Der Waschprozess wurde dreimal wiederholt (3×400 mL) um etwaige Rückstände wie Ammoniumsulfat und Butylamin auszuwaschen. Anschließend wurde das dunkelgraue Produkt (60 mg) mittels milder Ultraschallbehandlung (30 min Ultraschallbad) in entionisiertem Wasser (30 ml) dispergiert. Diese Dispersion wurde 24h stehen gelassen um nicht exfolierte, nicht funktionalisierte Plättchen und größere Partikel sedimentieren zu lassen. Im Anschluss wurde die überstehende Dispersion abgenommen. Die so erhaltene wässrige Dispersion enthielt funktionalisiertes Graphen in einer Konzentration von 0,1 mg/ml und war über eine Woche stabil.

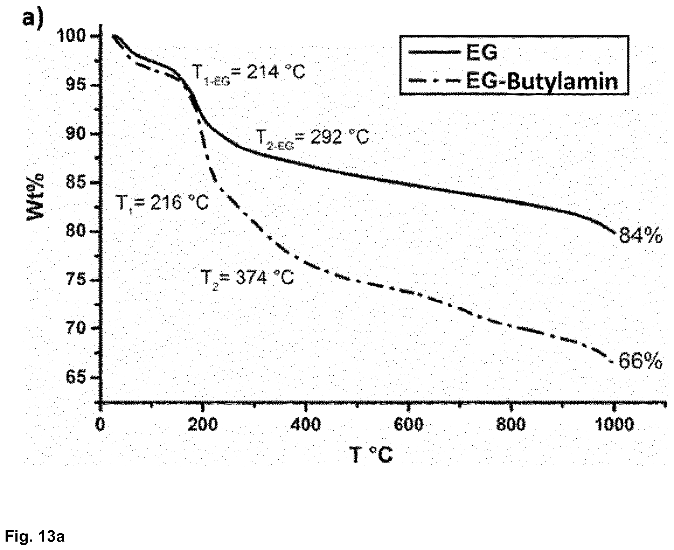

In TGA-Messungen wurde eine Restmasse von 66 wt.% ermittelt, wobei der Verlust im Wesentlichen auf die Abspaltung der Butyl-Gruppen bei 374°C zurückzuführen ist **(****Fig. 13a****).**

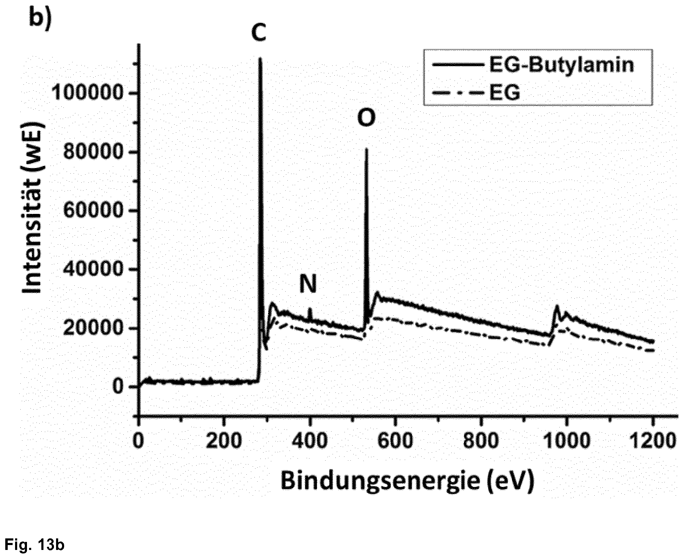

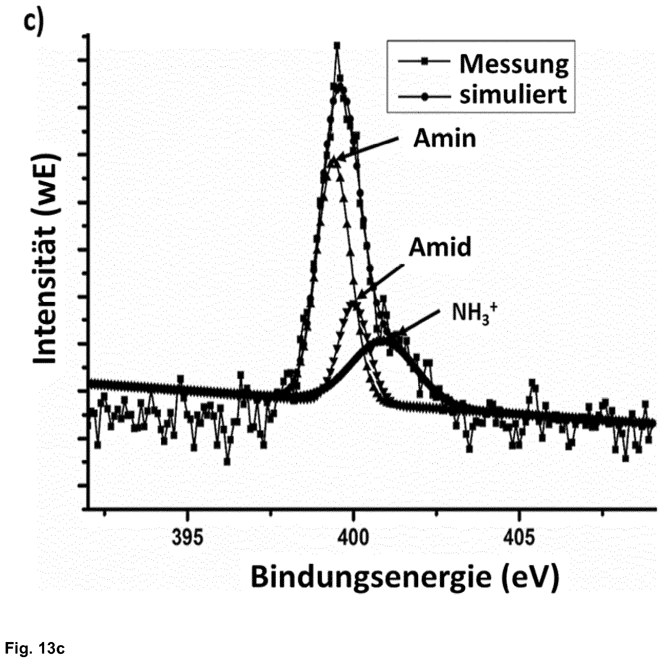

Mittels Röntgenphotoelektronenspektroskopie (XPS) konnten ein Stickstoffgehalt von 1,11 Atom-% nachgewiesen werden, welche den Butylamingruppen zuzuordnen sind **(****Fig. 13b****).** Das hochaufgelöste Spektrum der N1s-Region zeigt drei Hauptbanden welche den Amid-, Amin- und NH₃⁺-Gruppen zugeordnet werden können **(****Fig. 13c****).**

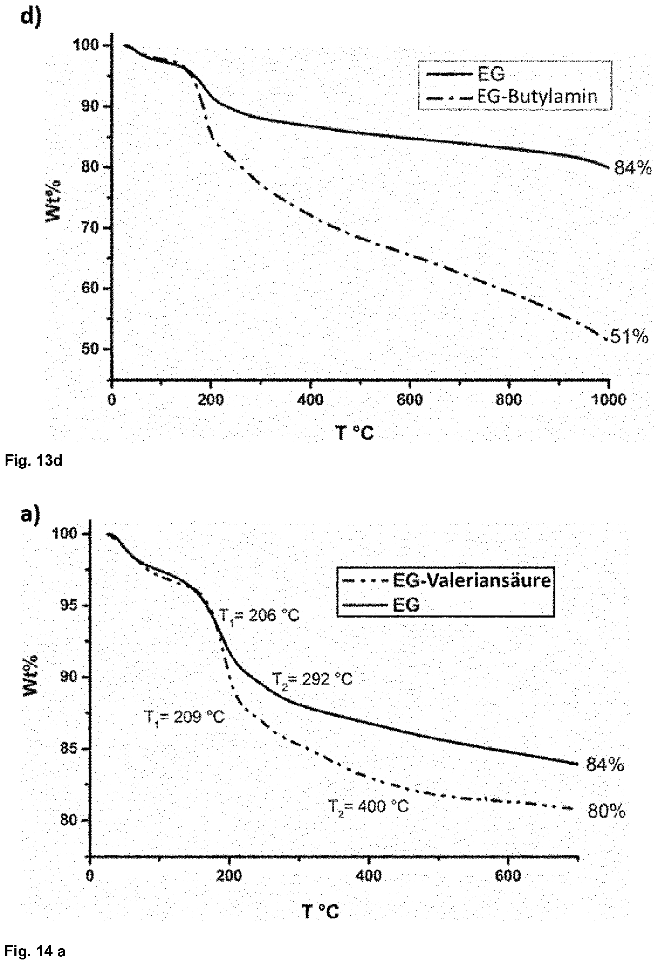

Der Funktionalisierungsgrad konnte durch Erhöhung der Butylaminkonzentration (150 mg, 2 mmol), bei ansonsten gleichen Bedingungen wie oben, erhöht werden. Dies konnte auch durch einen erhöhten Masseverlust in der TGA bis auf eine Restmasse von 51 wt.% nachgewiesen werden **(****Fig. 13d****).**

Das Verfahren wurde in analoger Weise auch mit anderen Aminen, wie tert-Octylamin, Melamin und 2-Amino-2-(hydroxymethyl)-1,3-propanediol (TRIS) erfolgreich durchgeführt.

### Vergleichsbeispiel 7

### Elektrochemische Exfolierung und in situ Funktionalisierung von Graphit mit Valeriansäure + Dispergierung

Die Graphitexfolierung wurde in einem Zwei-Elektrodensystem durchgeführt, wobei Graphitfolien (2 cm×3cm, 100 mg pro Folie) (Alfa Aesar, 99.99 % Reinheit) als Arbeitsanoden und Goldfolien derselben Maße als Kathoden genutzt wurden. Die Goldelektroden wurden parallel zu den Graphitelektroden mit einem festen Abstand von 2 cm angeordnet. Der Elektrolyt für die Exfolierung wurde durch Lösen von Ammoniumsulfat (0,1M, 0,93g) und Valeriansäure (30 mg, 0.3 mmol, Alfa Aesar, 99% Reinheit) in 70 ml entionisiertem Wasser hergestellt. Nachdem die Elektroden in den Elektrolyten getaucht wurden (6 cm² aktive Elektrodenfläche in der Elektrolytlösung) wurde ein konstantes Potential von 10V angelegt um den Exfolierungsprozess zu starten.

Nachdem die Exfolierung abgeschlossen und die Graphitfolie verbraucht war, wurden die suspendierten Graphenflocken über einen 0.2 µm PC (Polycarbonat) Filter abgetrennt und mit deionisiertem Wasser gewaschen. Der Waschprozess wurde dreimal wiederholt (3×400 mL) um etwaige Rückstände wie Ammoniumsulfat und Valeriansäure auszuwaschen. Anschließend wurde das dunkelgraue Produkt (60 mg) mittels milder Ultraschallbehandlung (30 min Ultraschallbad) in entionisiertem Wasser (30 ml) dispergiert. Diese Dispersion wurde 24h stehen gelassen um nicht exfolierte, nicht funktionalisierte Plättchen und größere Partikel sedimentieren zu lassen. Im Anschluss wurde die überstehende Dispersion abgenommen. Die so erhaltene wässrige Dispersion enthielt Graphen in einer Konzentration von 0,1 mg/ml und war über eine Woche stabil.

Die erfolgreiche Funktionalisierung konnte mittels TGA nachgewiesen werden, wo das funktionalisierte EG im Vergleich zu unfunktionalisiertem EG einen 4 wt.% größeren Masseverlust zeigte **(****Fig. 14a****).**

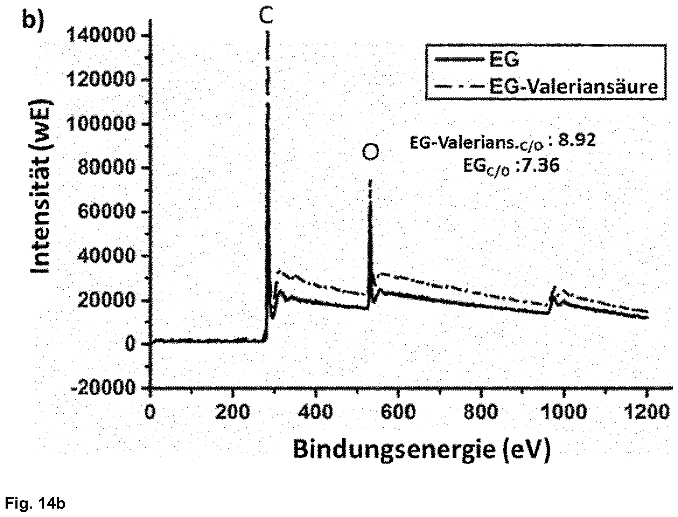

Gleichzeitig konnte mittels Röntgenphotoelektronenspektroskopie (XPS) eine Erhöhung des C/O-Verhältnisses auf ~9 nachgewiesen werden (im Vergleich unfunktionalisiertes EG: ~7,3) **(****Fig. 14b****)** was auf den Angriff und die Funktionalisierung mit Pentyl-Radikalen an die Graphenoberfläche erklärt werden kann (Fig. 2).

### Vergleichsbeispiel 8

### Elektrochemische Exfolierung von Graphen und direkt anschließende Funktionalisierung mit Polypyrrol + Dispergierung

Die Graphitexfolierung wurde in einem Zwei-Elektrodensystem durchgeführt, wobei Graphitfolien (2 cm×3cm, 100 mg pro Folie) (Alfa Aesar, 99.99 % Reinheit) als Arbeitsanoden und Goldfolien derselben Maße als Kathoden genutzt wurden. Die Goldelektroden wurden parallel zu den Graphitelektroden mit einem festen Abstand von 2 cm angeordnet. Der Elektrolyt für die Exfolierung wurde durch Lösen von Ammoniumsulfat (0,1M, 0,93g) in 70 ml entionisiertem Wasser hergestellt. Nachdem die Elektroden in den Elektrolyten getaucht wurden (6 cm² aktive Elektrodenfläche in der Elektrolytlösung) wurde ein konstantes Potential von 10V angelegt um den Exfolierungsprozess zu starten.

Nachdem die Exfolierung abgeschlossen und die Graphitfolie verbraucht war, wurde Pyrrol (100 µl, 1,5 mmol, Sigma-Aldrich, 98% Reinheit) zugegeben und die Mischung für 5 min in einem Ultraschallbad homogenisiert und anschließend 30min gerührt. Im Anschluss wurden die suspendierten Graphenflocken über einen 0.2 µm PC (Polycarbonat) Filter abgetrennt und mit deionisiertem Wasser gewaschen. Der Waschprozess wurde dreimal wiederholt (3×400 mL) um etwaige Rückstände wie Ammoniumsulfat und Pyrrol auszuwaschen. Anschließend wurde das dunkelgraue Produkt (60 mg) mittels milder Ultraschallbehandlung (30 min Ultraschallbad) in entionisiertem Wasser (30 ml) dispergiert. Diese Dispersion wurde 24h stehen gelassen um nicht exfolierte, nicht funktionalisierte Plättchen und größere Partikel sedimentieren zu lassen. Im Anschluss wurde die überstehende Dispersion abgenommen. Die so erhaltene wässrige Dispersion enthielt funktionalisiertes Graphen in einer Konzentration von 0,2 mg/ml und war über eine Woche stabil.

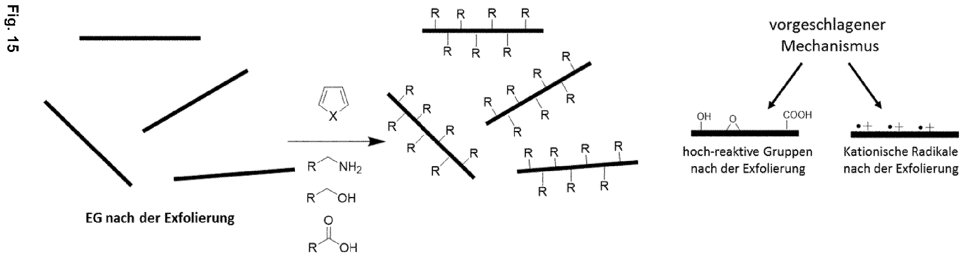

Der vorgeschlagene Mechanismus zur direkten Funktionalisierung ist in **Fig. 15** dargestellt. Durch den Prozess der elektrochemischen Exfolierung befinden sich freie Radikale an der Oberfläche des EG, welche durch das ausgedehnte Netzwerk konjugierter Elektronen stabilisiert sind. Diese Radikal- und Anionen können als Ausgangspunkt für frei-radikalische und oxidative Polymerisationsreaktionen genutzt werden um auf diese Weise die Graphenoberfläche kovalent zu funktionalisieren. Ein weiterer möglicher Mechanismus ist die Aktivierung von sauerstoffhaltigen Gruppen (ins. Epoxid) an der Graphenoberfläche durch die elektrochemische Exfolierung.

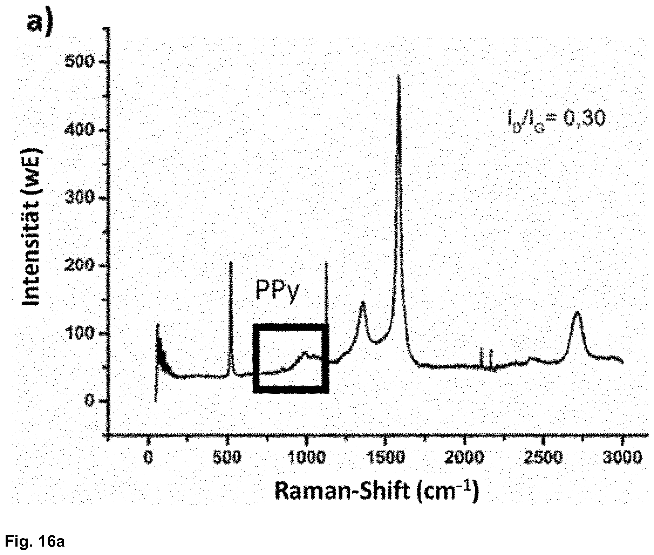

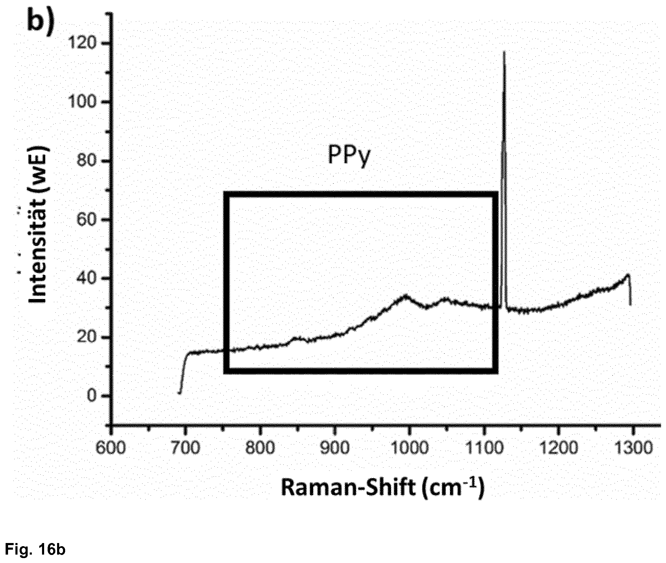

Das RAMAN Spektrum zeigte ein I_{D}/I_{G}-Verhältnis von 0.3. Außerdem indizierte das RAMAN-Spektrum drei Banden bei 848,5 cm⁻¹, 994,9 cm⁻¹ und 1050,1 cm⁻¹ **(****Fig. 16a****).** welche der Funktionalisierung von EG mit Polypyrrol (EG-PPy) zugeschrieben werden können und in unfunktionalisiertem EG nicht beobachtet werden **(****Fig. 16b****)**

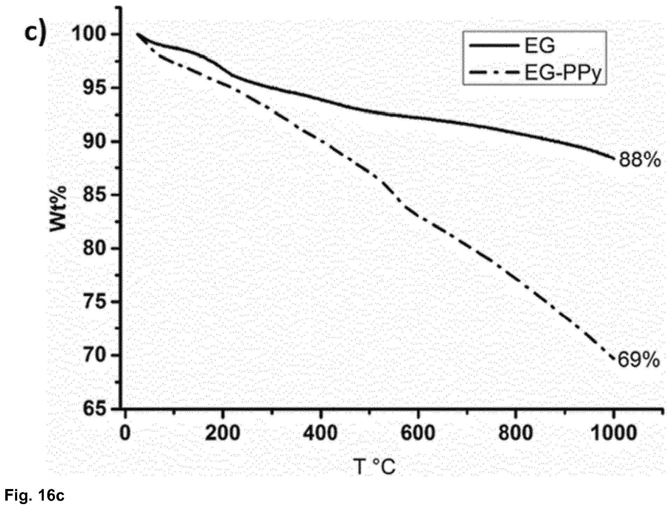

Darüberhinaus konnte die erfolgreiche Funktionalisierung mittels TGA nachgewiesen werden, wo das funktionalisierte EG im Vergleich zu unfunktionalisiertem EG einen 19 wt.% höheren Masseverlust zeigte **(****Fig. 16c****).**

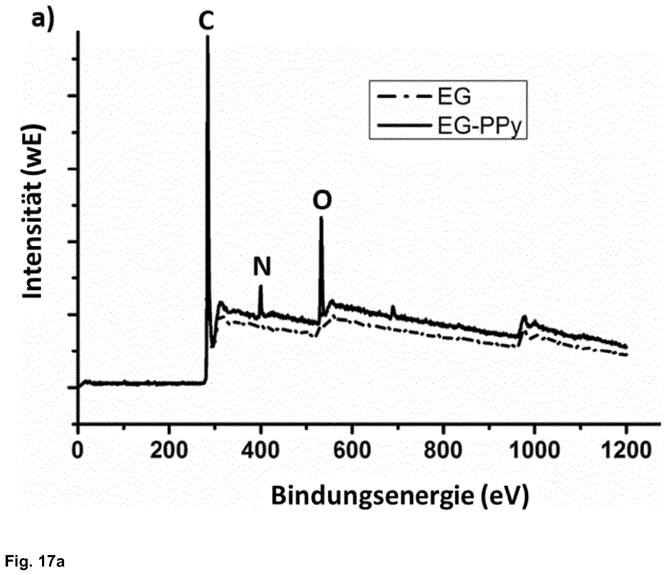

XPS Messungen ergaben einen Sauerstoffgehalte von 10,92 Atom% (EG) und 8,43 Atom% (EG-PPy) sowie einen Anteil von 3,37 Atom% Stickstoff für EG-PPy welcher auf die Polypyrrolfunktionalisierung zurückzuführen ist **(****Fig. 17a****)**

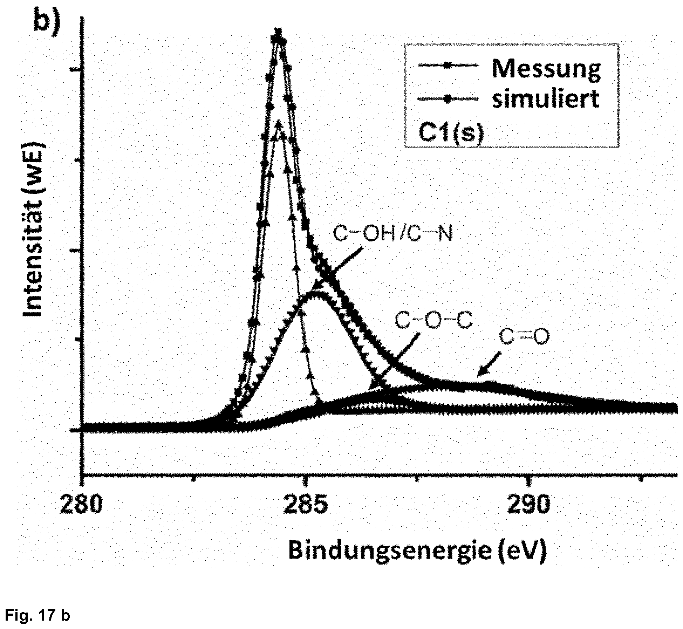

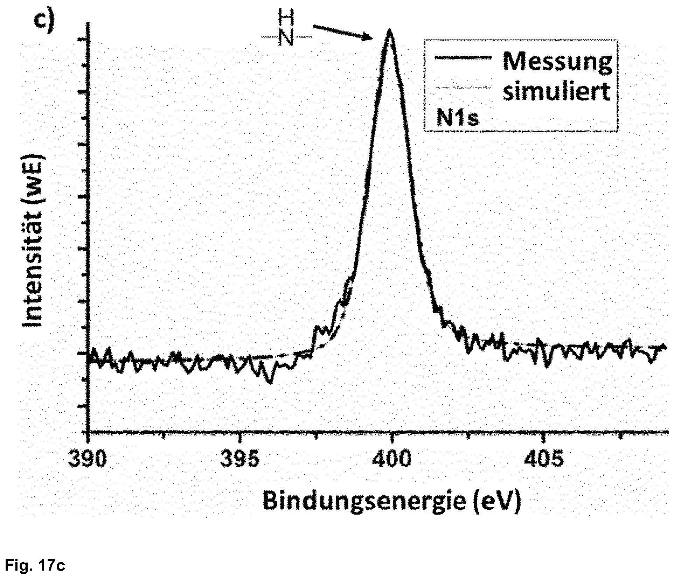

Das hochaufgelöste Spektrum der N1s-Region zeigt eine Hauptbande bei 400 eV welche den -NH-Gruppe, sowie die Bande bei 401 eV welche der Polaronstruktur (C-N⁺) von Polypyrrol zugeordnet werden können **(****Fig. 17c****).** Das hochaufgelöste Spektrum der C1s-Region **(****Fig. 17b****)** zeigt eine Bande bei 285,5 eV, welche der C-N-Bindung zugeordnet ist, welche in unfunktionalisiertem EG nicht nachweisbar ist.

### Vergleichsbeispiel 9

### Elektrochemische Exfolierung von Graphen und direkte Funktionalisierung mit Valeriansäure + Dispergierung

Durch die Effekte der elektrochemischen Exfolierung auf die Oberfläche des Graphens und die Erzeugung aktiver/reaktiver Zentren **(siehe** **Fig. 15****)** kann die Oberfläche darüber hinaus mit verschiedenen weiteren Agenzien die z.B. Amin- oder Carboxylatgruppen enthalten, funktionalisiert werden, wie in folgendem Beispiel verdeutlicht werden soll.

Die Graphitexfolierung wurde in einem Zwei-Elektrodensystem durchgeführt, wobei Graphitfolien (2 cm×3cm, 100 mg pro Folie) (Alfa Aesar, 99.99 % Reinheit) als Arbeitsanoden und Goldfolien derselben Maße als Kathoden genutzt wurden. Die Goldelektroden wurden parallel zu den Graphitelektroden mit einem festen Abstand von 2 cm angeordnet. Der Elektrolyt für die Exfolierung wurde durch Lösen von Ammoniumsulfat (0,1M, 0,93g) in 70 ml entionisiertem Wasser hergestellt. Nachdem die Elektroden in den Elektrolyten getaucht wurden (6 cm² aktive Elektrodenfläche in der Elektrolytlösung) wurde ein konstantes Potential von 10V angelegt um den Exfolierungsprozess zu starten.

Nachdem die Exfolierung abgeschlossen und die Graphitfolie verbraucht war, wurde Valeriansäure (100 mg, 0,98 mmol, Alfa-Aesar, 99% Reinheit) zugegeben und die Mischung für 5 min in einem Ultraschallbad homogenisiert und anschließend 30min gerührt. Im Anschluss wurden die suspendierten Graphenflocken über einen 0.2 µm PC (Polycarbonat) Filter abgetrennt und mit deionisiertem Wasser gewaschen. Der Waschprozess wurde dreimal wiederholt (3×400 mL) um etwaige Rückstände wie Ammoniumsulfat und Pyrrol auszuwaschen. Anschließend wurde das dunkelgraue Produkt (60 mg) mittels milder Ultraschallbehandlung (30 min Ultraschallbad) in entionisiertem Wasser (30 ml) dispergiert. Diese Dispersion wurde 24h stehen gelassen um nicht exfolierte, nicht funktionalisierte Plättchen und größere Partikel sedimentieren zu lassen. Im Anschluss wurde der Überstand abgenommen. Die so erhaltene wässrige Dispersion enthielt Graphen in einer Konzentration von 0,1 mg/ml und war über eine Woche stabil.

Die erfolgreiche Funktionalisierung konnte mittels TGA nachgewiesen werden, wo das funktionalisierte EG im Vergleich zu unfunktionalisiertem EG eine Restmasse nahezu 63 wt.% zeigte.

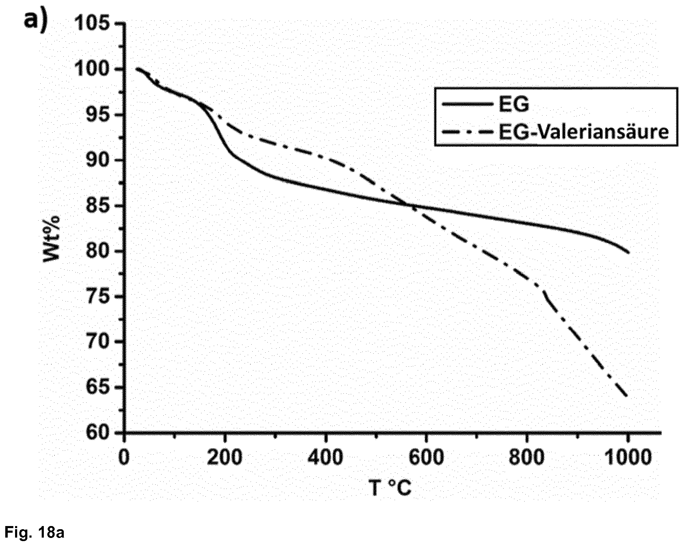

Darüber hinaus ist die Stufe bei ca. 200°C, welche üblicherweise der Umwandlung von Epoxy-Gruppen zugeordnet wird deutlich schwächer ausgeprägt als in unfunktionalisiertem EG, was auf eine Reaktion zwischen den Epoxygruppen in EG und der Valeriansäure hindeutet **(****Fig. 18a****).**

### Vergleichsbeispiel 10

### Elektrochemische Exfolierung von Graphen und direkte Funktionalisierung mit Aminen

Die Graphitexfolierung wurde in einem Zwei-Elektrodensystem durchgeführt, wobei Graphitfolien (2 cm×3cm, 100 mg pro Folie) (Alfa Aesar, 99.99 % Reinheit) als Arbeitsanoden und Goldfolien derselben Maße als Kathoden genutzt wurden. Die Goldelektroden wurden parallel zu den Graphitelektroden mit einem festen Abstand von 2 cm angeordnet. Der Elektrolyt für die Exfolierung wurde durch Lösen von Ammoniumsulfat (0,1M, 0,93g) in 70 ml entionisiertem Wasser hergestellt. Nachdem die Elektroden in den Elektrolyten getaucht wurden (6 cm² aktive Elektrodenfläche im Elektrolyten) wurde ein konstantes Potential von 10V angelegt um den Exfolierungsprozess zu starten.

Nachdem die Exfolierung abgeschlossen und die Graphitfolie verbraucht war, wurde Butylamin (100 mg, 1,37 mmol, Sigma-Aldrich, 99,5% Reinheit) zum Elektrolyten zugegeben und die Mischung für 5 min in einem Ultraschallbad homogenisiert und anschließend 30min gerührt. Im Anschluss wurden die suspendierten Graphenflocken über einen 0.2 µm PC (Polycarbonat) Filter abgetrennt und mit deionisiertem Wasser gewaschen. Der Waschprozess wurde dreimal wiederholt (3×400 mL) um etwaige Rückstände wie Ammoniumsulfat auszuwaschen. Anschließend wurde das dunkelgraue Produkt (60 mg) mittels milder Ultraschallbehandlung (30 min Ultraschallbad) in entionisiertem Wasser (30 ml) dispergiert. Diese Dispersion wurde 24h stehen gelassen um nicht exfolierte, nicht funktionalisierte Plättchen und größere Partikel sedimentieren zu lassen. Im Anschluss wurde der Überstand abgenommen. Die so erhaltene wässrige Dispersion enthielt Graphen in einer Konzentration von 0,1 mg/ml und war über eine Woche stabil.

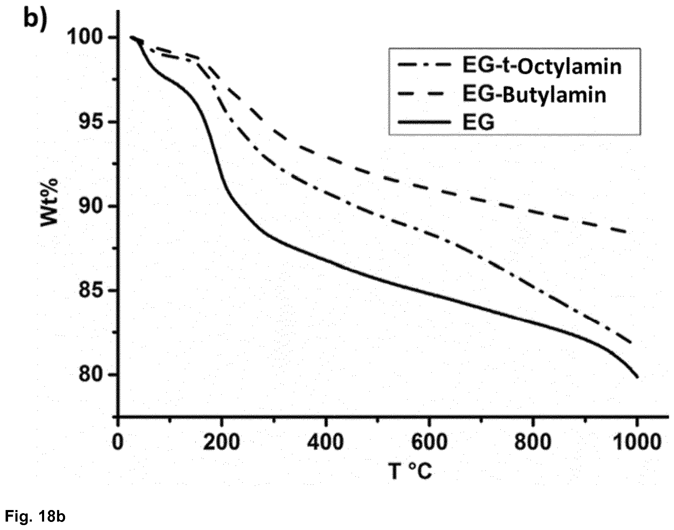

Die erfolgreiche Funktionalisierung konnte mittels TGA nachgewiesen werden. In **Fig. 18** **a** ist ersichtlich, dass die Stufe bei ca. 200°C, welche üblicherweise der Umwandlung von Epoxy-Gruppen zugeordnet wird deutlich schwächer ausgeprägt ist als in unfunktionalisiertem EG. Dies deutet auf eine Reaktion zwischen den Epoxygruppen in EG und dem Butyl-Amin hin. In analoger Weise wurde die Funktionalisierung mit tert-Octylamin mittels TGA nachgewiesen **(****Fig. 18 b)****.**

### Ausführungsbeispiel 11

### Funktionalisiertes Graphenpulver als Kathodenadditiv in Lithium-Ionen-Batterien

Funktionalisiertes Graphen (EG-SPANI) wurde in einer Lösungs-Mischmethode als Leitadditiv zu typischen Kathodenmaterialen wie LiFePO₄ und LiCoO₂ gegeben und so Elektroden für Lithium-Ionen-Batterien hergestellt.

Dazu wurde die nach Ausführungsbeispiel 3 hergestellte Dispersion mit kommerziell erhältlichem Kathodenmaterial (LiFePO₄/LiCoO₂) im Massenverhältnis von 1:1 unter deren Anwendung von Ultraschall gemischt. Nach Filtration und Trocknung der Mischung, wurde diese als Kathodenmaterial in eine Halbzelle gefüllt, in der Lithiumfolie als Anode angeordnet war.

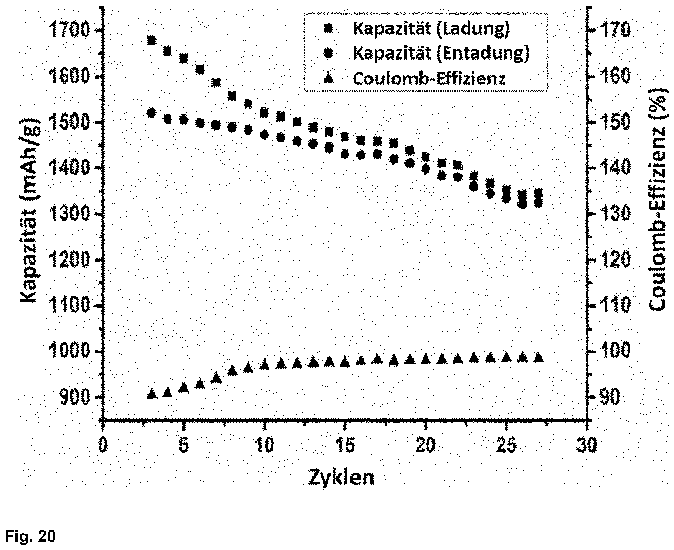

Bei einer konstanten Stromrate von 0,1 C (1C=170 mAh/g) zeigte das Material eine Lade- und Entladekapazität von 120 mAh/g **(****Fig. 20****).**

### Ausführungsbeispiel 12

### Funktionalisiertes Graphen als freistehende Elektrodenfilme in Superkondensatorzellen

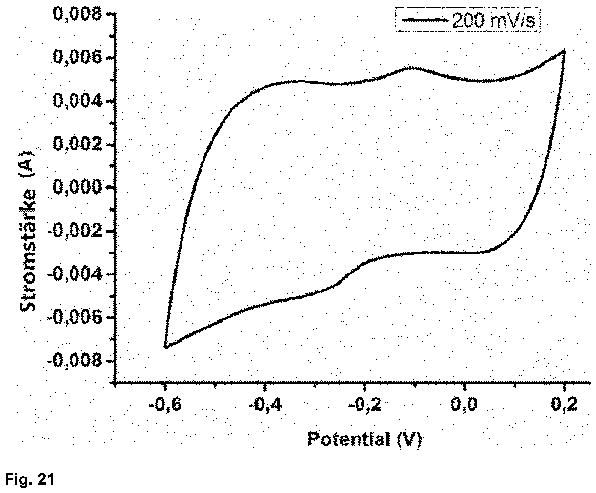

Freistehende Filme aus funktionalisiertem Graphen (EG-SPANI) wurden als Elektrode in einer 3-Elektroden Superkondensatorzelle, mit Platindraht als Gegenelektrode, AgCl als Referenzelektrode und 0,1 M Schwefelsäure als Elektrolyt eingesetzt. Die funktionalisierten Graphene zeigten eine gute Kapazität von bis zu 312 F/g, während unfunktionalisiertes EG eine Kapazität von weniger als 20 F/g aufwies **(****Fig. 21****).**

## Patentansprüche

1. Verfahren zur Herstellung einer tensidfreien Dispersion aus funktionalisiertem Halbleiter- oder Leitermaterial aus einem zweidimensional geschichtet strukturierten, kohlenstoffbasiertem Grundmaterial durch elektrolytische Exfolierung, in einer Elektrolysezelle, umfassend mindestens ein Elektrodenpaar aus erster und zweiter Elektrode, und eine wässrige und/oder alkoholische Elektrolytlösung, enthaltend Schwefelsäure und/oder mindestens ein Salz, ausgewählt aus Sulfat- und/oder Hydrogensulfat- und/oder Perchlorat- und/ oder Persulfat-Salz,
mit den Schritten:
a) Inkontaktbringen der Elektroden mit der Elektrolytlösung,
b) Elektrolytische Exfolierung des Grundmaterials durch Anlegen einer Spannung zwischen erster und zweiter Elektrode,
c) Abtrennen des funktionalisierten Leiter- oder Halbleitermaterials von der Elektrolytlösung, und
d) Dispergieren des funktionalisierten Materials nach der Abtrennung in anorganischen und/oder organischen flüssigen Medien, ohne den Zusatz von Tensiden,
wobei
mindestens die erste der Elektroden des Elektrodenpaares das zweidimensional geschichtet strukturierte, kohlenstoffbasierte Grundmaterial enthält,
und die erste Elektrode als Anode geschaltet ist,
und der Elektrolytlösung vor und/oder während der elektrolytischen Exfolierung mindestens eine organische Verbindung zugegeben wird, wobei die organische Verbindung ausgewählt ist aus
a. Monomeren elektrisch leitender Polymere, welche anodisch oxidativ polymerisiert werden, und/oder
b. frei radikalisch polymerisierbaren, wasserlöslichen Vinyl-Monomeren, welche in ihrer Struktur mindestens eine Amidgruppe und/oder mindestens eine anionische funktionelle Gruppe aufweisen, und welche an der Anode frei radikalisch polymerisieren.

2. Verfahren nach Anspruch 1, **dadurch gekennzeichnet, dass** das Halbleiter- oder Leiter-Material ausgewählt ist aus Graphen, kohlenstoffbasierten Halbleiter- oder Leiter-Polymeren.

3. Verfahren nach Anspruch 1 oder 2, **dadurch gekennzeichnet, dass** das zweidimensional geschichtet strukturierte, kohlenstoffbasiert Grundmaterial ausgewählt ist aus halbleitenden oder leitenden Kohlenstoffmodifikationen, kohlenstoffbasierten Halbleiter- oder Leiter-Polymeren in Form von zweidimensional strukturiertem Grundmaterial.

4. Verfahren nach einem der Ansprüche 1 bis 3, **dadurch gekennzeichnet, dass** die zweite Elektrode ein Metall umfasst.

5. Verfahren nach einem der Ansprüche 1 bis 4, **dadurch gekennzeichnet, dass** die Spannung 1 bis 20 V beträgt.

6. Verfahren nach einem der Ansprüche 1 bis 5, **dadurch gekennzeichnet, dass** das funktionalisierte Material nach der Abtrennung getrocknet und dispergiert wird.

## Claims

1. Method for producing a surfactant-free dispersion of functionalised semiconductor or conductor material from a two-dimensionally layered structured, carbon-based base material by electrolytic exfoliation, in an electrolytic cell, comprising at least one electrode pair of a first and second electrode, and an aqueous and/or alcoholic electrolyte solution, containing sulphuric acid and/or at least one salt, selected from sulphate and/or hydrogen sulphate and/or perchlorate and/or persulphate salt, comprising the steps:
a) bringing the electrodes into contact with the electrolyte solution,
b) electrolytic exfoliation of the base material by applying a voltage between the first and second electrode,
c) separating the functionalized conductor or semiconductor material from the electrolyte solution, and
d) dispersing the functionalized material after separation in inorganic and/or organic liquid media, without the addition of surfactants,
wherein
at least the first of the electrodes of the electrode pair contains the two-dimensionally layered structured, carbon-based base material,
and the first electrode is connected as an anode,
and at least one organic compound is added to the electrolyte solution before and/or during the electrolytic exfoliation, wherein the organic compound is selected from
a. monomers of electrically conductive polymers which are polymerised by anodic oxidation, and/or
b. freely radical-polymerizable, water-soluble vinyl monomers which have at least one amide group and/or at least one anionic functional group in their structure and which undergo free radical polymerisation at the anode.

2. Method according to claim 1, **characterised in that** the semiconductor or conductor material is selected from graphene, carbon-based semiconductor or conductor polymers.

3. Method according to claim 1 or 2, **characterised in that** the two-dimensionally layered structured, carbon-based base material is selected from semiconductive or conductive carbon modifications, carbon-based semiconductor or conductor polymers in the form of two-dimensionally structured base material.

4. Method according to any of claims 1 to 3, **characterised in that** the second electrode comprises a metal.

5. Method according to any of claims 1 to 4, **characterised in that** the voltage is 1 to 20 V.

6. Method according to any of claims 1 to 5, **characterised in that** the functionalised material is dried and dispersed after the separation.

## Revendications

1. Procédé pour la fabrication d'une dispersion exempte de tensioactif constituée d'un matériau semi-conducteur ou conducteur fonctionnalisé constitué d'un matériau de base à base de carbone, structuré en couches bidimensionnelles, par exfoliation électrolytique, dans une cellule d'électrolyse, comprenant au moins une paire d'électrodes constituée d'une première et d'une seconde électrode, et une solution électrolytique aqueuse et/ou alcoolique, contenant de l'acide sulfurique et/ou au moins un sel choisi parmi le sel de sulfate et/ou de sulfate d'hydrogène et/ou de perchlorate et/ou de persulfate,
avec les étapes:
a) mettre en contact les électrodes avec la solution électrolytique,
b) exfolier de manière électrolytique le matériau de base en appliquant une tension entre la première et la seconde électrode,
c) séparer le matériau conducteur ou semi-conducteur fonctionnalisé de la solution électrolytique, et
d) disperser le matériau fonctionnalisé après la séparation dans des milieux liquides inorganiques et/ou organiques, sans ajout de tensioactifs,
dans lequel
au moins la première des électrodes de la paire d'électrodes contient le matériau de base à base de carbone structuré en couches bidimensionnelles,
et la première électrode est commutée en tant qu'anode,
et au moins un composé organique est ajouté à la solution électrolytique avant et/ou pendant l'exfoliation électrolytique, dans lequel le composé organique est choisi parmi
a. monomères de polymères conducteurs d'électricité qui sont polymérisés par oxydation anodique, et/ou
b. monomères vinyliques hydrosolubles pouvant être polymérisés par voie radicalaire qui présentent dans leur structure au moins un groupe amide et/ou au moins un groupe fonctionnel anionique, et qui polymérisent par voie radicalaire à l'anode.

2. Procédé selon la revendication 1, **caractérisé en ce que** le matériau semi-conducteur ou conducteur est choisi parmi du graphène, polymères semiconducteurs ou conducteurs à base de carbone.

3. Procédé selon la revendication 1 ou 2, **caractérisé en ce que** le matériau de base à base de carbone structuré en couches bidimensionnelles est choisi parmi des formes du carbone semi-conductrices ou conductrices, polymères semiconducteurs ou conducteurs à base de carbone sous forme de matériau de base à structure bidimensionnelle.

4. Procédé selon l'une des revendications 1 à 3, **caractérisé en ce que** la seconde électrode comprend un métal.

5. Procédé selon l'une des revendications 1 à 4, **caractérisé en ce que** la tension est de 1 à 20 V.

6. Procédé selon l'une des revendications 1 à 5, **caractérisé en ce que** le matériau fonctionnalisé est séché et dispersé après la séparation.
